## Europäisches Patentamt
## European Patent Office
## Office européen des brevets

(19)

(11) Veröffentlichungsnummer: **0 006 583**
A1

(12) **EUROPÄISCHE PATENTANMELDUNG**

(21) Anmeldenummer: 79102059.7

(22) Anmeldetag: 21.06.79

(51) Int. Cl.³: **H 04 Q 3/00**, H 04 M 19/00, H 04 M 19/02

(30) Priorität: 28.06.78 DE 2828441
30.06.78 DE 2828886
14.07.78 DE 2831105
14.08.78 DE 2835627

(43) Veröffentlichungstag der Anmeldung: 09.01.80
Patentblatt 80/1

(84) Benannte Vertragsstaaten: **AT CH FR GB IT NL SE**

(71) Anmelder: **SIEMENS AKTIENGESELLSCHAFT Berlin und München, Postfach 261, D-8000 München 22 (DE)**

(72) Erfinder: **Picard, Peter, Dipl.-Ing., Platanenstrasse 116 E, D-8021 Taufkirchen (DE)**
Erfinder: **Dragotinov, Alexander, Dipl.-Ing., Zillertalstrasse 61, D-8000 München 70 (DE)**

(54) Verfahren zur spulen-, relaiskontakt- und transformatorfreien Rufstrom- und Schleifenstromeinspeisung.

(57) Verfahren zur spulen-, relaiskontakt- und transformatorfreien Rufstrom- und Schleifenstromeinspeisung in eine zweiadrige Teilnehmerleitung mit einer Einspeiseeinheit (EE), welche gesteuerte Konstantstromquellen (S1a, S1b, S2a, S2b) mit Stromregeleinheit (T1, T3) enthält.

Während des Rufens speist die erste Stromquelle (S1a) eine Rufstromimpulsfolge (IS) in die angeschlossene Teilnehmerleitung (a) ein.

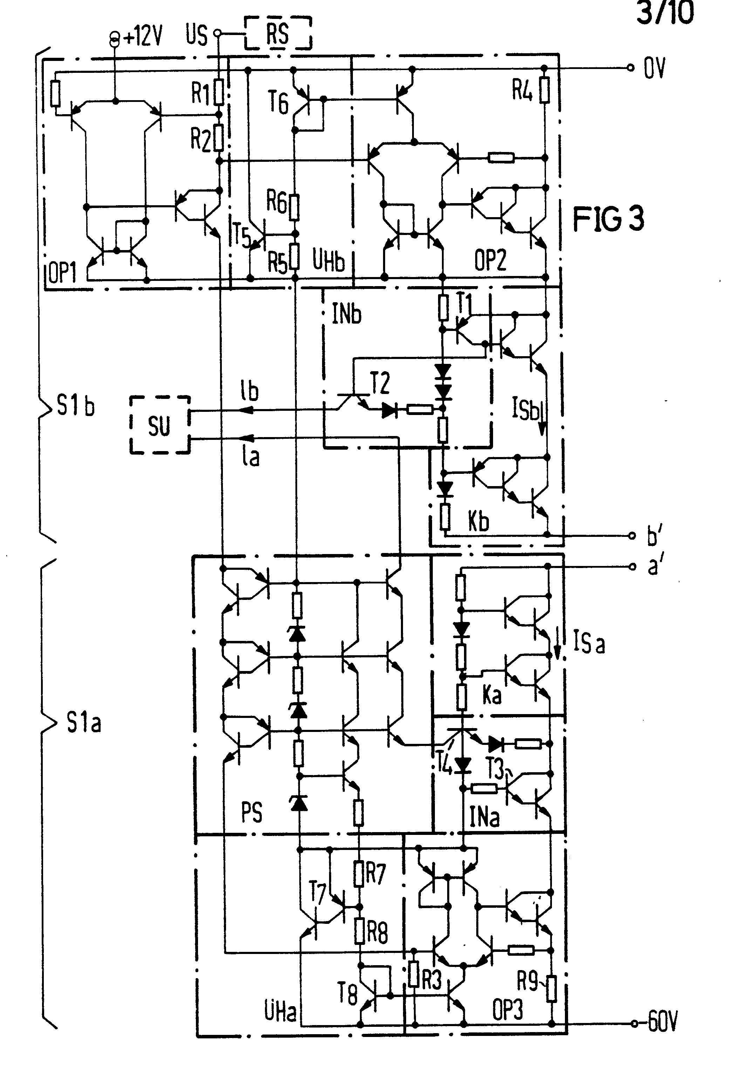

Nach dem Abheben speist diese Stromquelle (S1a) den mit Informationen modullerbaren Schleifenstrom ein. Die Rufstromabschaltung wird durch den Betriebszustand der Stromregeleinheit gesteuert. Bei Übersteuerung der Regeleinheit wird das Rufen fortgesetzt. Im aktiven Betriebszustand der Stromregeleinheit wird das Rufen unterbrochen und der Schleifenstrom eingespeist (Figur 3).

EP 0 006 583 A1

- 1 -

SIEMENS AKTIENGESELLSCHAFT      Unser Zeichen

Berlin und München      VPA 78 P 6 1 1 5 EUR

Verfahren zur spulen-, relaiskontakt- und transformatorfreien Rufstrom- und Schleifenstromeinspeisung

Die Erfindung betrifft ein Verfahren der Nachrichtentechnik. Sie wurde insbesondere für ein PCM-Fernsprech-
Vermittlungssystem entwickelt, in dessen Ämter durch
Großintegration hergestellte Dekodierer und 2-Draht/
4-Draht-Gabelschaltungen angebracht sind, an die Teilnehmerstationen in der Umgebung des jeweiligen Amtes
über teils lange, teils kurze Teilnehmerleitungen angeschlossen sind. Die Erfindung eignet sich aber auch für
andere Vermittlungssysteme bzw. Ämter, z.B. auch für
analoge Signale übertragende Systeme, selbst wenn sie
keine Gabelschaltung enthalten.

Die Erfindung betrifft nämlich ein Verfahren zur spulen-, relaiskontakt- und transformatorfreien Rufstrom-
und Schleifenstromeinspeisung in eine eine erste und
eine zweite Ader aufweisende Teilnehmerleitung zu einer
Teilnehmerstation, mit einer Einspeiseeinheit, die eine

Be 1 Ky /18 .6.1979

während des Rufens von Rufstromgenerator-Taktimpulsen gesteuerte Stromquelle enthält, nämlich eine erste an die erste Ader angeschlossene Stromquelle, wobei die Einspeiseeinheit während des Rufens einen abwechselnden Betriebszustand aufweist, bei dem rhythmisch die erste Stromquelle entweder, gesteuert von einer Taktimpulsphase, einen ersten Rufstromimpuls der ersten Strompolarität über die erste Ader zur Teilnehmerstation einspeist, oder, gesteuert von einer Taktimpulspause, keinen Strom über diese erste Ader zur Teilnehmerstation einspeist, so daß die erste Stromquelle über die Teilnehmerleitung eine Folge erster unipolarer Rufstromimpulse als Rufstrom zur Teilnehmerstation einspeist,und wobei die Einspeiseeinheit nach dem Abheben des Teilnehmers, zur Einspeisung des – mit dem Teilnehmer gelieferten Empfangsinformationen – modulierbaren Schleifenstromes, in einen andauernden Betriebszustand gesteuert wird, bei dem die erste Stromquelle den Schleifenstrom über die Teilnehmerleitung zur Teilnehmerstation einspeist.

Ein solches Verfahren ist bereits z.B. durch die DE-OS 26 27 140, insbesondere Fig. 11  bekannt. Solche Einspeiseeinheiten haben den Vorteil, zusammen mit der dort ebenfalls gezeigten 2-Draht/4-Draht-Gabelschaltung vollintegrierbar zu sein und damit kostengünstig sowie raum- und arbeitsaufwandsparend gleichzeitig zur Rufstrom- und Schleifenstromversorgung der an die 2-Drahtseite über die Teilnehmerleitung angeschlossenen Teilnehmerstation mitausgenutzt werden zu können. Dabei können die Länge bzw. der Widerstand der Teilnehmerleitung zur Teilnehmerstation und der Eingangswiderstand der Teilnehmerstation im aufgelegten und im abgehobenen Zustand, sowie die Bauteile innerhalb der Gabelschaltung Toleranzen aufweisen, ohne den Betrieb zu gefährden. Die insgesamt vier Stromquellen, nämlich zwei an der ersten Ader und zwei an der zweiten Ader, senden hier eine aus zwei unipolaren Impulsfolgen durch Überlagerung gebildete bipolare Rufstromimpulsfolge aus und können auch zur Verstärkung jener Modulation mitausgenutzt werden, die den von den beiden ankommenden 4-Drahtseite-Anschlüssen zu den 2-Drahtseite-Anschlüssen übertragenen Empfangsinformationen entspricht.

Ein ähnliches, aber nur zwei erste und nicht auch zwei zweite Stromquellen ausnutzendes Verfahren mit nur einer unipolaren Rufstromimpulsfolge ist auch durch die DE-OS 26 49 024, insbesondere durch deren Figur bekannt. Darüberhinaus sind noch weitere Verfahren mit einer transformatorfreien 2-Draht/4-Draht-Gabelschaltung bekannt, die sich ebenfalls zusammen mit ihren Einspeiseeinheiten zur Integration eignen und meistens nur zwei Stromquellen aufweisen, vgl. z.B. 1978 Internat. Zurich Seminar on Digital Communications, Proc., IEEE Catalogue 78CH 1325-0 ASST, Seite C7.1, C7.3, sowie DE-OS 18 14 956, Fig. 10.

Je größer die Toleranz des Eingangswiderstandes der Teilnehmerstation, und je länger und je inhomogener die Teilnehmerleitung ist, umso verschiedener werden die Laufzeiten bzw. der zeitliche Verlauf der Spannung oder Ströme jedes Rufstromimpulses auf den Adern der Teilnehmerleitung. Der Anwendung solcher Einspeiseeinheiten in Ämtern bzw. Systemen sind daher oft unangenehme enge Grenzen durch die zulässigen Toleranzen, insbesondere von Länge und Widerstand der Adern zur Teilnehmerstation und durch die zulässigen Toleranzen der Eingangswiderstände insbesondere der Teilnehmerstation im aufgelegten Zustand gesetzt. Es ist daher erstrebenswert, eine unnötige Verkleinerung solcher Toleranzen zu vermeiden. Die gleiche Einspeiseeinheit soll also für möglichst verschiedene Teilnehmerleitungslängen bei weiten Toleranzen der Eingangswiderstände der Teilnehmerstationen einsetzbar sein.

Ob der Teilnehmer schon abgehoben hat oder noch nicht, ist aus dem von der jeweiligen Teilnehmerleitungslänge, Teilnehmereingangswiderstand usw. abhängigen Stromverlauf (bzw. Spannungsverlauf) während eines Rufstromimpulses auf der Teilnehmerleitung erkennbar. Im aufgelegten Zustand der Teilnehmerstation ist deren Eingangswiderstand und damit, bei konstantem Strom, deren nötige Eingangsspannung, höher als im abgehobenen Zustand.

Es ist bekannt, daß, bei Verwendung von Konstantstromquellen als Stromquellen, leitungslängenunabhängig, also auch bei großer Leitungslänge, eine recht hohe Energie an den angeschlossenen Verbraucher geliefert wird.

Um die Stromquelle von ihrem ersten, die Rufstromimpulse einspeisenden Zustand nach dem Abheben in ihren zweiten, den Schleifenstrom einspeisenden Zustand zu steuern, dient der mit beachtlichen Toleranzen behaftete Stromverlauf bzw. Spannungsverlauf während eines Rufstromimpulses auf der Teilnehmerleitung als Kriterium dafür, ob der Teilnehmer schon abhob. Um dieses Kriterium zu erhalten, kann man an sich den Strom bzw. die Spannung auf der Teilnehmerleitung selbst messen. Dies hat aber den Nachteil, daß ein Widerstand, der die maximal zulässige Teilnehmerleitungslänge vermindert bzw. die zur Teilnehmerstation übertragene Rufenergie mindert, an der Teilnehmerleitung angebracht werden muß oder daß eine besondere Spannungsmeßeinheit an die Teilnehmerleitung angeschlossen werden muß. Überdies muß dann erst noch eine automatisierte Auswertung des gemessenen Strom- bzw. Spannungsverlaufes
durchgeführt werden, um ein Kriterium in JA/NEIN-Art dafür zu bilden, ob der Teilnehmer abhob oder nicht.

Die Aufgabe der Erfindung ist, das eingangs sowie im
Oberbegriff genannte Verfahren so auszubilden, daß beim
Rufen eine Teilnehmerleitungslänge-unabhängige, möglichst
hohe Rufenergie in die Teilnehmerstation eingespeist
wird, ohne den genauen Verlauf des Stromes oder der Spannung selbst auf der Teilnehmerleitung zur Erhaltung eines
JA/NEIN-Kriteriums für die Rufstromabschaltung messen
und auswerten zu müssen. Ein für weitgehend beliebige,
also große Toleranzen aufweisende Leitungslängen geeignetes Kriterium wird erfindungsgemäß dadurch erhalten,
daß die Stromregeleinheit der ausgangsseitig gleichstrommäßig einen sehr hochohmigen Innenwiderstand aufweisenden, daher als gesteuerte Konstantstromquelle wirkenden
Stromquelle bei Übersteuerung die Rufstromabschaltung
veranlaßt, indem a) die Stromregeleinheit, bei Betrieb
in ihrem übersteuerten Bereich während zumindest eines
Teils der Rufstromimpulsdauer, die Einspeiseeinheit in
deren abwechselnden Betriebszustand zur Fortsetzung der
Rufstromeinspeisung steuert und indem b) die Stromregeleinheit, bei ständigem Betrieb in ihren aktiven also nicht
übersteuerten Bereich während der Rufstromimpulsdauer,
die Einspeiseeinheit in deren andauernden Betriebszustand
zur Einspeisung des Schleifenstromes steuert.

Die Übersteuerung der Stromregeleinheit tritt nämlich
nur ein, wenn der Eingangswiderstand der Teilnehmerleitung, gesehen von der hochohmigen Gleichstromquelle, wegen des Noch-Nicht-Abhebens des Teilnehmers besonders
hoch ist, so daß zumindest während eines Teils der Dauer
des Rufstromimpulses die Stromregeleinheit der Stromquelle, z.B. mindestens ein Transistor dieser Einheit, wegen Übersteuerung nicht mehr die Stromquelle veranlassen kann, den momentanen Rufstrom mit der vollen Amplitude von Strom und Spannung in die Teilnehmerleitung einzuspeisen. Diese Übersteuerung bzw. Nichtübersteuerung der Stromregeleinheit bildet also bei der Erfindung das Kriterium dafür, ob der Teilnehmer abhob oder nicht. Falls nämlich der Teilnehmer abhob, fließt der Rufstrom mit einer verminderten Spannung zwischen den Teilnehmerleitungsadern, sodaß dann die Stromregeleinheit in ihrem aktiven, nicht übersteuerten Bereich betrieben wird.

Die zulässigen Toleranzgrenzen für die Teilnehmerleitungslängen und für den Teilnehmereingangswiderstand ergeben sich daraus, daß im eingehängten Zustand bei minimal zulässiger Teilnehmerleitungslänge, z.B. bei der Länge Null Meter, der Eingangswiderstand der Teilnehmerstation noch groß genug sein muß, daß die Übersteuerung der Stromregeleinheit noch eintritt. Dies entspricht der Regel, daß im eingehängten Zustand bei minimal zulässiger Leitungslänge, auch bei minimal zulässigem Isolationswiderstand zwischen den Adern und minimal zulässigem Teilnehmerstation-Eingangswiderstand noch zuverlässig eine Übersteuerung eintritt. Die maximal zulässige Teilnehmerleitungslänge ist z.B. dadurch festgelegt, daß bei maximaler Leitungslänge, also bei höchstmöglichem Eigenwiderstand der Teilnehmerleitung, im abgehobenen Zustand der Teilnehmerstation noch nicht eine Übersteuerung der Stromregeleinheit auftritt, damit nicht der eingehängte Zustand der Teilnehmerstation vorgetäuscht wird.

Um die Erfindung in optimaler Weise für möglichst viele verschiedene Fälle einsetzen zu können, sollte der Eingangswiderstand der Teilnehmerstation im eingehängten Zustand möglichst hoch und im abgehobenen Zustand demgegenüber sehr klein sein, wobei bei gleichzeitigem Zusammentreffen der unteren Toleranzgrenzen von Teilnehmerleitungslänge und von Teilnehmerstation-Eingangswiderstand im eingehängten Zustand noch zuverlässig eine Übersteuerung der Stromregeleinheit auftreten soll. Andererseits soll bei gleichzeitigem Zusammentreffen der oberen Toleranzgrenzen von Teilnehmerleitungslänge und von Teilnehmerleitungs-Eingangswiderstand im abgehobenen Zustand zuverlässig noch keine so starke Übersteuerung der Stromregeleinheit auftreten, daß ein Kriterium für den eingehängten Zustand vorgetäuscht wird.

Da zur Bildung des Kriteriums kein zusätzlicher Widerstand oder Meßkreis in der Rufstrombahn innerhalb der Stromquelle oder in den Adern der Teilnehmerleitung eingefügt werden muß, wird durch die Erfindung die maximal zulässige Teilnehmerleitungslänge nicht beeinträchtigt und auch die in die Teilnehmerleitung einspeisbare Rufenergie nicht beeinträchtigt. Zur Einspeisung der Leitungslänge-unabhängigen, hohen, vom Teilnehmer empfangenen Rufenergie ist ohnehin im allgemeinen die Stromregeleinheit der Stromquelle nötig, deren Zustand zur Bildung des Kriteriums bei der Erfindung geschickt mitausgenutzt wird.

Die Übersteuerung äußert sich in der Stromregeleinheit je nach deren Aufbau anders. An sich kann diese Einheit beliebig aufgebaut sein, denn grundsätzlich jede solche Einheit wird übersteuert, wenn der Ausgang der Konstantstromquelle zu hochohmig wird. Die Übersteuerung äußert sich z.B. in einer völligen Sperrung eines Regeltransistors der Stromregeleinheit, oder z.B. in der starken Sättigung eines Regeltransistors, oder z.B. im Sperren oder Durchlässigwerden von Dioden, z.B. Zenerdioden, der Stromregelschaltung.

Die Erfindung fördert die Anwendung standardisierter hochintegrierter Einspeiseeinheiten in Systemen bzw. Ämtern, z.B. Vermittlungssystemen, und verringert damit den Aufwand insbesondere beim Bau und Betrieb solcher Ämter bzw. bei Neuanschluß von Teilnehmerstationen, im Vergleich zu den heutzutage noch allgemein üblichen, nichtintegrierten, teueren Einspeiseeinheiten. Das Prinzip der Erfindung eignet sich dabei nicht nur für eine mehrere Stromquellen aufweisende Einspeiseeinheit. Dieses Prinzip der Erfindung löst die Aufgabe der Erfindung an sich bereits dann, wenn die Einspeiseeinheit sogar nur eine einzige Stromquelle enthält.

Wenn die Einspeiseeinheit nur eine einzige Stromquelle enthält, schwankt das Potential der ersten Ader, an die diese Stromquelle angeschlossen ist, beim Rufen mit erheblich größerer Amplitude um einen Mittelwert, als das Potential der anderen zweiten Ader der Teilnehmerleitung, was oft nicht stört.

Zum Rufen des Teilnehmers braucht man meistens besonders hohe Energien. Daher ist oft die Anbringung einer einzigen Stromquelle in der Einspeiseeinheit nicht befriedigend, vor allem um auch große Toleranzen für die Länge der verlustbehafteten Teilnehmerleitung zulassen zu können. Durch die im Anspruch 2 genannte Maßnahme wird die zum Rufen verwendbare Energie vervierfacht, indem die Einspeiseeinheit vier gesteuerte Stromquellen statt einer einzigen enthält. Außerdem schwankt bei dieser Weiterbildung das Potential jeder der beiden Adern der Teilnehmerleitung mit der gleichen Amplitude um einen Mittelwert, so daß beim Rufen trotz der hohen Rufenergien kapazitive und induktive Kopplungen der ersten Ader zu anderen Teilnehmerleitungen angenähert kompensiert werden durch die kapazitiven und induktiven Kopplungen der zweiten Ader zu jenen anderen Teilnehmerleitungen. Durch diese Weiterbildung werden also vor allem auch die besonders störenden höherfrequenten Komponenten der Nebensprechstörungen weniger stark auf die benachbarten Teilnehmerleitungen gekoppelt und damit solche Störungen weitgehend beseitigt, obwohl die zum Rufen verwendete Energie bzw. Leistung sogar vervierfacht ist. Diese Vorteile werden also dadurch erreicht, daß eine weitere erste, aber an die zweite Ader angeschlossene Stromquelle der Einspeiseeinheit während des Rufens, gesteuert von der Taktimpulsphase, über die zweite Ader der Teilnehmerleitung einen Rufstromimpuls der ersten, die Rückleitung des Rufstromimpulses der ersten Stromquelle der ersten Ader über die Teilnehmerstation in die weitere erste Stromquelle unterstützenden Strompolarität einspeist, daß eine zweite, an die erste Ader angeschlossene Stromquelle sowie eine weitere zweite, an die zweite Ader angeschlossene Stromquelle während des Rufens, gesteuert von der Taktimpulspause, einen Rufstromimpuls der zweiten, der ersten Strompolarität jeweils entgegengesetzten Strompolarität einspeisen, so daß die ersten Stromquellen im abwechselnden Betriebszustand erste unipolare Stromimpulse der ersten Strompolarität und die zweiten Stromquellen, in den Pausen zwischen den ersten unipolaren Stromimpulsen, zweite unipolare Stromimpulse der zweiten Strompolarität einspeisen und so daß damit dann die Einspeiseeinheit bipolare Rufstromimpulse einspeist, und daß im andauernden Betriebszustand der Einspeiseeinheit, also nach dem Abheben des Teilnehmers, nur die ersten Stromquellen oder nur die zweiten Stromquellen, aber nicht die beiden übrigen Stromquellen der Einspeiseeinheit den Schleifenstrom in die Teilnehmerleitung einspeisen.

Zur Bildung des Kriteriums kann z.B. gemäß Anspruch 3 die Stromregeleinheit einen Regeltransistor enthalten, der bei Übersteuerung der Stromregeleinheit in seinen gesättigten Zustand, nach dem Abheben aber in seinen ungesättigten Zustand gesteuert wird, und daß dieser Regeltransistor in seinem gesättigten Zustand an ein Verknüpfungsglied ein das Nichtabheben anzeigendes, die Einspeiseinheit weiterhin in ihren abwechselnden Zustand steuerndes Rufen-Fortsetzen-Signal abgibt.

Erdschlüsse, einen Erdtastendruck und Kurzschlüsse zu Drittspannungen, z.B. zur Versorgungsspannung, werden als solche erkennbar, indem gemäß Anspruch 4 beide erste Stromquellen, getrennt voneinander, bei Übersteuerung ihre Rufen-Fortsetzen-Signale an eine Verknüpfungseinheit abgeben und indem, bei Fehlen eines dieser Rufen-Fortsetzen-Signale, diese Verknüpfungseinheit, evtl. zusätzlich je nach der Höhe der gemessenen Momentanamplituden, ein Unsymmetriesignal, nämlich z.B. ein Erdschluß-Signal bzw. Fremdspannungs-Signal, abgibt.

Die den Schleifenstrom nach dem Abheben des Teilnehmers einspeisenden    Stromquellen können zur Übertragung bzw. Verstärkung der der Empfangsinformation entsprechenden Informationen mitausgenutzt werden, indem gemäß Anspruch 5 im andauernden Betriebszustand der Einspeiseinheit der Schleifenstrom, durch Steuerung der den Schleifenstrom einspeisenden Stromquelle mit den Empfangsinformationen, die dem Teilnehmer geliefert werden sollen, mit den betreffenden Empfangsinformationen moduliert wird.

Insbesondere bei einem aus hochintegrierten Bausteinen aufgebauten Vermittlungssystem erwies sich als günstig, gemäß Anspruch 6 die Einspeiseeinheit zusammen mit einer transformatorfreien 2-Draht/4-Draht-Gabelschaltung auf einem gemeinsamen monolithischen Baustein anzubringen und die an die 2-Drahtseite angeschlossene Einspeiseeinheit ihre Ströme über die 2-Drahtseite in die an die 2-Drahtseite angeschlossene Teilnehmerleitung einspeisen zu lassen. Hier bildet die Einspeiseeinheit mit der Gabelschaltung eine hochintegrierte, platzsparende, aufwandsarme und entsprechend billige Baueinheit.

Insbesondere für ein PCM-Fernsprechvermittlungssystem erwies sich auch als günstig, gemäß Anspruch 7 die Einspeiseeinheit zusammen mit einem D/A-Wandler - evtl. auch noch zusammen mit einem A/D-Wandler und zusammen mit der nach Anspruch 6 verwendeten Gabelschaltung, alle gemeinsam auf einem gemeinsamen monolithischen Baustein anzubringen und an der Analogseite des D/A-Wandlers angeschlossene, den Schleifenstrom einspeisende Stromquellen der Einspeiseeinheit in deren andauerndem Betriebszustand mit den dekodierten Empfangsinformationen zu steuern. Diese hochintegrierte Weiterbildung ist, besonders wenn sie neben dem Wandler noch die Gabelschaltung in sich enthält, besonders günstig hinsichtlich der Aufwandseinsparung. Bei einem Vermittlungssystem, besonders bei einem PCM-Vermittlungssystem, ist der Anteil der Kosten von Einspeiseeinheiten, Gabelschaltungen und Wandlern an den Gesamtkosten oft sehr hoch, nämlich oft über 50 % der Gesamtkosten, wenn man diskrete einzelne Bauelemente anwendet. Gemäß den heutigen Entwicklungstendenzen wird sogar oft angestrebt, möglichst jeder Teilnehmerstation eines PCM-Vermittlungssystems individuell eine eigene Einspeiseeinheit, Gabelschaltung und Wandler im Amt zuzuordnen. Durch die im Anspruch 7 erfaßte Weiterbildung ist es möglich, gerade diese Kosten bzw. den sie bewirkenden Aufwand, stark zu senken, da nun trotz Großintegration die Tücken der Toleranzeinhaltung hinsichtlich
insbesondere der Teilnehmerleitungslänge bzw. -widerstand, und die Tücken der Toleranzeinhaltung hinsichtlich der Eingangswiderstände der Teilnehmerstation entsprechend gut beherrschbar sind.

Die im Anspruch 8 genannte Maßnahme gestattet, die Toleranzen für die Teilnehmerleitungslänge bzw. für den
Teilnehmerstations-Eingangswiderstand weiter zu vergrößern bzw. nicht mehr zu beeinträchtigen. Dazu sollen
die Amplituden der beim Rufen durch Kopplungen zwischen
benachbarten Teilnehmerleitungen bewirkten Störungen sowie die Amplituden der Einschwingvorgänge auf der betreffenden Teilnehmerleitung dadurch verringert werden,
daß die Stromquelle die Rufstromimpulse jeweils mit
einem sinusähnlichen zeitlichen Verlauf einspeist. Es
werden also insbesondere Rechteck-Rufstromimpulse, extrem
steile hohe Flanken und stark ausgeprägte Ecken im zeitlichen Verlauf des einzelnen Rufstromimpulses möglichst
vermieden. Wegen des dann geringeren Anteils an höherfrequenten Komponenten der nach der Fourrier-Analyse
betrachteten Rufimpulse sind nämlich die Amplituden der
Einschwingvorgänge und Kopplungen stark vermindert, was
die Toleranzen für die Teilnehmerleitungslänge und für
den Teilnehmerstations-Eingangswiderstand vergrößert.

Wird eine besonders hohe Energie bzw. Leistung der eingespeisten Rufstromimpulse angestrebt, dann kann man
gemäß Anspruch 9 zwei erste und zwei zweite Stromquellen anbringen, die jede für sich Rufstromimpulse mit
jeweils sinusähnlichem zeitlichen Verlauf einspeisen.

Bilden die Rufstromimpulse gemäß Anspruch 10 angenähert
jeweils Sinushalbwellen, dann werden höchstens unmittelbar nach Beginn und nach dem Ende jeder Sinushalbwelle

0006583

Einschwingvorgänge beobachtet, deren Amplituden aber so klein bleiben, daß sie kaum eine Übersteuerung der Stromregeleinheit bewirken und so ein Noch-Nicht-Abheben des Teilnehmers vortäuschen, wie verschieden auch die Teilnehmerleitung und der Teilnehmerstations-Eingangswiderstand jeweils ist. Besonders gering sind diese Einschwingvorgänge, wenn gemäß Anspruch 9 und 10 dabei vier Stromquellen solche Sinushalbwellen einspeisen, weil dann die Rufstromimpulsfolge angenähert einer normalen vollen Sinuswelle mit vielen Perioden entsprechen kann.

Bilden die Rufstromimpulse gemäß Anspruch 11 angenähert einen glockenförmigen Verlauf, dann sind auch die Einschwingvorgänge unmittelbar nach dem Beginn und nach dem Ende jedes Rufstromimpulses besonders klein. Bei Kombination der in den Ansprüchen 9 und 11 genannten Verfahren sind auch die durch ungenaue Steuerung der Stromquellen bei Beginn und Ende jedes Rufstromimpulses auftretenden Einschwingvorgänge verminderbar.

Bei dem im Anspruch 12 genannten Verfahren ist das Abklingen der Einschwingverzerrungen während der Prüfung, ob der Teilnehmer abhob, besonders zuverlässig gesichert.

Die im Anspruch 13 genannten Maßnahmen gestatten eine zusätzliche Unterdrückung von Gleichtakt-Störspannungen. Sie ermöglichen darüberhinaus, daß diese Gleichtakt-Komponente der Störspannungen nicht mehr die Stromregeleinheiten der Stromquellen übersteuert und so nicht mehr eine Fehlanzeige über den Zustand der Teilnehmerstation auslöst, insbesondere so die Fehlanzeige auslöst, der Teilnehmer hätte noch nicht abgehoben bzw. wieder eingehängt. Auch ein Unsymmetriesignal, z.B. wegen Erdtastendruck des Teilnehmers oder wegen Aderbruch, wird bei der Erfindung durch Übersteuerung der Stromregeleinheit einer Stromquelle erst dann erzeugt, wenn trotz Kompensationsversuche der Entstöreinheit eine Symmetrie der Potentiale auf den Adern nicht mehr erreicht wird. Wenn nämlich die Entstöreinheit nicht nur die Eigenkapazitäten der Adern so aufladen muß, um die Symmetrie wieder herzustellen, sondern wenn der Einfluß, z,B. eines unsymmetrisch niederohmig vorhandenen Kurzschlusses einer Ader gegen Erde oder Fremdspannung, von der Entstöreinheit nur mit nicht vorhandener, extrem hoher Leistung zu kompensieren wäre, ist die Entstöreinheit überfordert - in diesem Kurzschlußfall wird, nach dem erfolglosen Kompensationsversuch der Entstöreinheit, die Übersteuerung der Stromregeleinheit der betreffenden Stromquelle eine bleibende Unsymmetrie anzeigen, also z.B. den Erdtastendruck des Teilnehmers anzeigen. Die Entstöreinheit entstört also hinsichtlich der störenden Längsspannungen, z.B. bez. Starkstromeinflüssen, ohne die Überwachung des Teilnehmers und seiner Leitung zu verhindern.

Bei der im Anspruch 14 genannten Weiterbildung ist vorgesehen, daß die Entstöreinheit durch einen mindestens eine einzige Verstärkerstufe enthaltenden Differenzverstärker gebildet wird, dessen Ausgangssignal bzw. dessen Ausgangssignale den Stromregeleinheiten der betreffenden Stromquellen zugeleitet werden. Der Aufbau der Anordnung ist dann besonders einfach und die Kompensation der Längsspannungen wird dann durch die ohnehin vorhandenen Stromregeleinheiten mit übernommen.

Bei der im Anspruch 15 genannten Weiterbildung ist vorgesehen, daß die Entstöreinheit zwei Ausgangssignale, nämlich das nichtinvertierte und das invertierte, liefert, von denen das eine die an die erste Ader und das andere die an die zweite Ader der Teilnehmerleitung angeschlossene, jeweils gleichzeitig Strom einspeisende Stromquelle steuert. Dann sind die Stromquellen besonders leicht steuerbar.

Das im Anspruch 16 genannte Verfahren gestattet, zusätzlich die durch Herstellungstoleranzen bedingten Fehler
der Stromquellen, die eine gleichzeitige Einspeisung von
Strömen verschiedener Momentanamplitude, bzw. eine dadurch bedingte Abweichung des mittleren Potentials zwischen den beiden Adern der Teilnehmerleitung vom Sollwert, ständig selbsttätig zu kompensieren. Diese Weiterbildung gestattet daher, die Ausschußquote bei der Herstellung einer solchen Einspeiseeinheit als Monolith zu
verringern, wie später noch erläutert wird.

Die Erfindung wird anhand von in den Figuren gezeigten
Ausführungsbeispielen weiter erläutert, wobei

Fig. 1 und 2 ein Ausführungsbeispiel mit einer zusätzlichen Gabelschaltung und

Fig. 3 ein Ausführungsbeispiel zweier erster Stromquellen der Einspeiseeinheit,

Fig. 4 ein Beispiel für die Anwendung des im Anspruch 8
genannten Verfahrens bei einer Einspeiseeinheit,
die zusammen mit einer 2-Draht/4-Draht-Gabelschaltung auf einem monolithischen Baustein angebracht werden kann,

Fig. 5 ein Beispiel für die Rufstromgenerator-Taktimpulse,

Fig. 6 und 7 angenähert sinushalbwellenförmige einzelne
Rufstromimpulse,

Fig. 8 eine aus Sinushalbwellen zusammengesetzte bipolare Sinuswellen-Rufstromimpulsfolge,

Fig. 9 und 10 Beispiele von durch Übersteuerung bewirkten Abflachungen der Rufstromimpuls-Maxima,

Fig. 11 bis 14 Beispiele für einen glockenförmigen Verlauf der Rufstromimpulse,

Fig. 15 ein der Fig. 3 ähnliches Beispiel für den Aufbau von Stromquellen,

Fig. 16 und 20 Beispiele einer in einer Gabelschaltung angebrachten Einspeiseeinheit, die durch eine Entstöreinheit gesteuerte Stromquellen enthält,

Fig. 17 ein Schema zur Erläuterung der Wirkungen der Längsspannungen auf die Entstöreinheit der Erfindung,

Fig. 18 ein Diagramm zur Erläuterung von Potentialbeispielen an den Stromquellenausgängen bzw. Teilnehmerleitungsanschlüssen, und

Fig. 19 ein der Fig. 3 und 15 ähnliches Beispiel für die Steuerung der Stromregeleinheiten der Stromquellen zeigen.

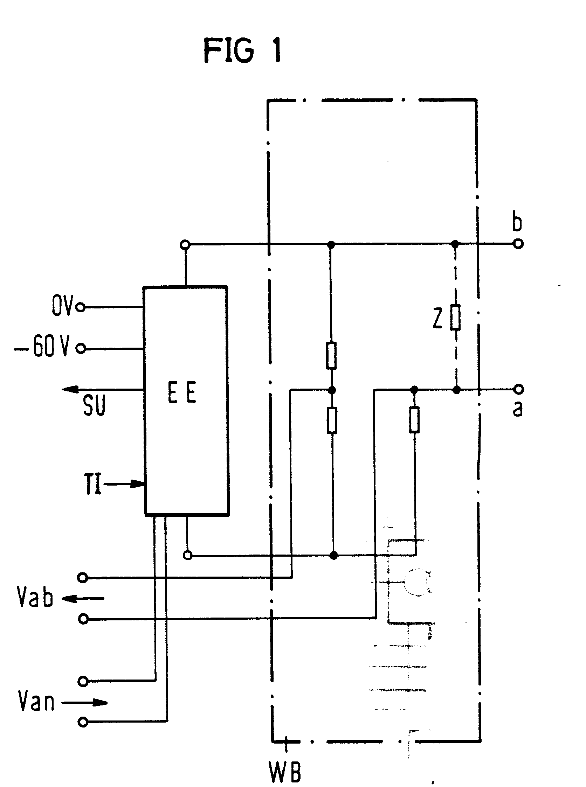

Figur 1 zeigt einen schematischen Überblick über ein Ausführungsbeispiel einer erfindungsgemäß betriebenen Einspeiseeinheit EE, die hier an der 2-Drahtseite einer 2-Draht/4-Draht-Gabelschaltung angebracht ist. Diese Gabelschaltung ist frei von Spulen, insbesondere frei von Transformatoren aufgebaut und zusammen mit der Einspeiseeinheit EE aus integrierten Bausteinen oder vollständig durch einen einzigen integrierten Baustein herstellbar. Die Rufstromeinspeisung und die Schleifenstromeinspeisung erfolgt hier über die aus Widerständen gebildete Widerstandsbrücke WB der Gabelschaltung, wobei der eine Zweigwiderstand Z dieser Widerstandsbrücke durch den Widerstand der ersten Ader a, der zweiten Ader b der Teilnehmerleitung und durch den Eingangswiderstand der Teilnehmerstation gebildet wird. Der in Figur 1 gezeigte Zweigwiderstand Z ist also nicht innerhalb der Gabelschaltung angebracht, sondern stellt nur symbolisch den außen angeschlossenen Widerstand zwischen den 2-Drahtseite-Anschlüssen a und b dar.

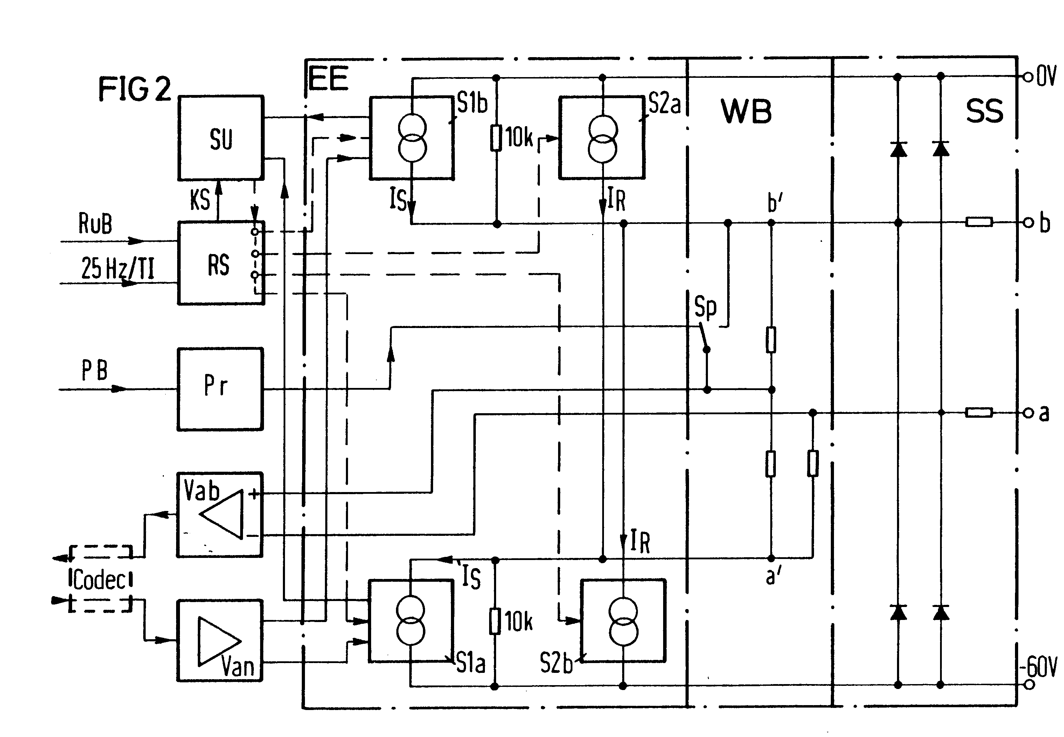

Die Einspeiseeinheit EE enthält z.B. vier, in Figur 2 gezeigte Stromquellen S1a, S1b, S2a, S2b, nämlich je eine erste S1a, S1b und eine zweite S2a, S2b, sich in der eingespeisten Strompolarität IS oder IR unterscheidende Stromquelle an jeder Ader a,b. Bei Verminderung der Anforderungen an die Energie der Rufimpulse genügt sogar schon, daß die Einspeiseeinheit nur die erste, an die erste Ader, z.B. a, angeschlossene Stromquelle S1a enthält, die Ströme IS mit einer ersten Polarität einspeisen kann.

Diese Stromquellen sind steuerbar, d.h. sie liefern jeweils Ströme, deren Amplitude von einem Steuersignal abhängig ist. Als Steuersignal dient hier z.B. ein Taktimpuls TI eines 25 Hz-Taktimpulsgenerators, der nach Verknüpfung mit dem Rufbefehl RuB in der Einheit RS dem Steuereingang der Stromquellen bzw. der Einspeiseeinheit zugeleitet wird und die Amplitude des von der betreffenden Stromquelle gelieferten Stromes IS bzw. IR einstellt, vgl. Fig. 1 und 2.

Die Widerstandsbrücke WB ist außerdem mit den abgehenden Anschlüssen Vab der 4-Drahtseite bzw. mit dessen Verstärker verbunden, vgl. Fig. 1 und 2. Die ankommenden Anschlüsse Van der 4-Drahtseite bzw. dessen Verstärker, sind hier mit den ersten Stromquellen S1a, S1b der Einspeiseeinheit EE verbunden, um diese zu steuern und so zur Modulation des Schleifenstromes IS zu veranlassen.

Die Einspeiseeinheit EE wird während des Rufens in einen abwechselnden Betriebszustand gesteuert, bei dem abwechselnd ein Rufstromimpuls der ersten Polarität IS und anschließend, bei Anbringung nur einer ersten Stromquelle, kein Strom, bei Anbringung von vier Stromquellen hingegen jeweils ein Rufstromimpuls der zweiten, entgegengesetzten Polarität IR, über die 2-Drahtseite-Anschlüsse a, b in die Teilnehmerleitung eingespeist werden. Die vier Stromquellen der Einspeiseeinheit EE speisen also hinsichtlich der Stromrichtung jeweils bipolare Rufstromimpulsfolgen IS, IR in die Teilnehmerleitung a, b ein.

Nach dem Abheben des Teilnehmers wird die Einspeiseeinheit EE in ihren anderen, nämlich in den andauernden Betriebszustand gesteuert, damit sie den mit Empfangsinformationen modulierbaren Schleifenstrom IS zum Empfang an die betreffende Teilnehmerstation liefert. Dazu wird, bei Anbringung nur der einen ersten Stromquelle S1a, diese Stromquelle den Schleifenstrom IS einspeisen und, bei Anbringung von vier Stromquellen, werden jeweils zwei Stromquellen der vier Stromquellen, z.B. S1a, S1b, den Schleifenstrom einspeisen, wohingegen die beiden anderen Stromquellen, dann S2a, S2b, keinen Strom über die 2-Drahtseite-Anschlüsse der Gabelschaltung einspeisen.

Um die zulässigen Toleranzen für die Länge und die Homogenität der Teilnehmerleitung, sowie um die Toleranzen der elektrischen Eigenschaften der Teilnehmerstation nicht zu beeinträchtigen, ist erfindungsgemäß vorgesehen, daß während des Rufens im eingehängten Zustand eine Stromregeleinheit, z.B. ein Regeltransistor in der einspeisenden Stromquelle der Einspeiseeinheit übersteuert wird, und daß ein diese Übersteuerung anzeigendes Signal SU, z.B. über eine Stromüberwachungseinheit SU oder direkt, an eine Verknüpfungseinheit, die die Rufstromabschaltung überwacht, weitergeleitet wird. Diese Verknüpfungseinheit besteht z.B. aus einem in den Figuren nicht gezeigten UND-Glied, das den Rufbefehl RuB mit dem die Übersteuerung anzeigenden Signal SU verknüpft, und nur bei Übersteuerung der Stromregeleinheit den Taktimpuls TI über RS an die Stromquellen weiterleitet. Das Signal SU schaltet aber den bisher anliegenden Rufbefehl RuB bei Fehlen der Übersteuerung ab, so daß die Einspeiseeinheit EE in ihren andauernden Zustand gesteuert wird.

Die in Figur 2 gezeigte Einspeiseeinheit EE enthält also vier Stromquellen    S1b, S2b, S1a, S2a und speist daher besonders viel Rufenergie in die Adern über a, b ein. Diese vier Stromquellen sind von der Rufschaltung RS gesteuert, die hier den Rufbefehl RuB mit den Taktimpulsen TI des Rufstromgenerators verknüpft und so die Steuerung in den abwechselnden Zustand übernimmt. Dabei enthält die Einspeiseeinheit EE eine erste Stromquelle S1a für die Einspeisung über den Schaltungspunkt a' in die erste Ader a, sowie eine erste Stromquelle S1b für die Einspeisung über den Schaltungspunkt b' in die zweite Ader b. An die erste Ader a ist zudem über a' eine zweite Stromquelle S2a angeschlossen, welche Ströme der zweiten entgegengesetzten Polarität an die erste Ader abgeben kann, im Vergleich zu den Strömen der ersten Stromquelle der ersten Ader S1a. An die zweite Ader ist über b' auch noch die zweite Stromquelle S2b angeschlossen. Von diesen vier Stromquellen sind während einer Rufstromeinspeisung jeweils die ersten Stromquellen S1a, S1b oder jeweils die zweiten Stromquellen S2a, S2b mit der Teilnehmerleitung, hier mit den 2-Drahtseite-Anschlüssen a, b, verbunden. Dabei liefern die zweiten Stromquellen S2a, S2b jeweils Ströme der entgegengesetzten Polarität IR, im Vergleich zu den Strömen IS der ersten Stromquellen S1a, S1b, über die 2-Drahtseite-Anschlüsse a, b an die Teilnehmerstation.

Nach dem Abheben des Teilnehmers liefern bei diesem Beispiel nur noch die ersten Stromquellen S1a, S1b Strom

über a', b' und über die 2-Drahtseite-Anschlüsse a, b an die Teilnehmerstation. Die zweiten Stromquellen S2a, S2b sind hingegen bei diesem Ausführungsbeispiel völlig abgeschaltet. Der von den ersten Stromquellen S1a, S1b gelieferte Strom bzw. Teile dieses Stromes stellen dann den der Teilnehmerstation zugeleiteten Schleifenstrom dar.

Bei dem in Figur 2 gezeigten Ausführungsbeispiel ist der abgehende Verstärker Vab der abgehenden Richtung der 4-Drahtseite zusätzlich an die Widerstandsbrücke WB angeschlossen. Ein ankommender Verstärker Van der ankommenden Richtung der 4-Drahtseite wirkt hier direkt auf die beiden ersten Stromquellen S1a, S1b und moduliert so den an die Teilnehmerstation über a', b' und über die Anschlüsse a, b gelieferten Schleifenstrom.

Die Modulation der übertragenen Informationen kann eine PCM-Modulation sein. Es kann jedoch auch eine analoge Amplitudenmodulation oder andere Modulation, z.B. Frequenzmodulation, vorgesehen sein. Bei PCM-Modulation kann insbesondere vorgesehen sein, daß die Umwandlung der Analogsignale in PCM-Signale und die Umwandlung der PCM-Signale in Analogsignale in der in Figur 2 gezeigten, an die 4-Drahtseite-Anschlüsse angeschlossenen Einheit Codec durchgeführt wird. Es ist jedoch auch möglich, digitale Signale, z.B. für einen Fernschreiber, über die Teilnehmerleitung zur Teilnehmerstation zu senden, so daß dann die ersten Stromquellen S1a, S1b durch digitale statt analoge Signale moduliert werden und so mit den digitalen Signalen modulierte Schleifenströme in die betreffende Teilnehmerleitung eingespeist werden. Figur 2 zeigt außerdem eine Einrichtung zum Überspannungsschutz SS. Sie besteht aus vier in Brückenschaltung geschalteten Dioden, welche bei Überspannungen auf der ersten Ader oder zweiten Ader durchlässig werden und auf diese Weise insbesondere die Stromquellen S1a, S1b, S2a, S2b, sowie die Verstärker Vab, Van vor Überspannungen schützen. Bei starken, länger andauernden Überspannungen wird zuerst diese Schutzeinrichtung zerstört werden, bevor die Einspeiseeinheit, die Gabelschaltung oder gar sonstige Einrichtungen des Amtes zerstört werden. Außerdem sind innerhalb der Schutzeinrichtung SS noch zwei ohmsche Längswiderstände in Reihe zur ersten und zweiten Ader eingefügt, welche insbesondere bei Kurzschluß, z.B. zwischen der ersten oder zweiten Ader einerseits und den Spannungsversorgungs-Anschlüssen 0V/-60V oder 220 V/380 V andererseits, die auftretenden Ströme begrenzen. Die Kurzschlußfestigkeit der Gabelschaltung kann auch dadurch gefördert werden, daß die Ausgänge der Stromquellen S1a, S1b, S2a, S2b jeweils durch Transistoren gebildet werden, die eine hohe Spannungsfestigkeit aufweisen und außerdem ausreichend hochohmig sind, um den auftretenden Strom IS bzw. IR zu begrenzen.

Dadurch, daß hochohmige Widerstände, vergleiche 10k, in der Einspeiseeinheit  EE an den Ausgängen der Stromquellen angebracht werden, sind die Innenwiderstände dieser Stromquellen besser definiert, wodurch diese Stromquellen auch bei Serienfertigung solcher integrierter Bausteine einen ausreichend definierten hohen Innenwiderstand aufweisen und damit einen ausreichend definierten Schleifenstrom bzw. Rufstrom mit hohem Innenwiderstand abgeben.

Außerdem enthält das in Figur 2 gezeigte Ausführungsbeispiel in der Widerstandsbrücke WB noch den elektronischen Schalter Sp zum Prüfen der Funktionstüchtigkeit der Gabelschaltung. Schließt nämlich dieser Schalter Sp den überbrückten Widerstand der Widerstandsbrücke WB kurz, dann ist diese Widerstandsbrücke WB verstimmt. In diesem Falle werden die über den Verstärker Van empfangenen Signale an der Widerstandsbrücke WB reflektiert und daher über den Verstärker Vab und über die 4-Drahtseite zurückgeliefert. Gleichzeitig kann dabei geprüft werden, ob die Meßeinheit ME bei leitendem Schalter Sp wirklich die Einspeiseeinheit EE bzw. deren Stromquellen in den andauernden Zustand steuert, weil das Leiten des Schalters Sp den abgehobenen Zustand der an die Anschlüsse a, b angeschlossenen Teilnehmerstation vortäuscht. Gelegentlich ist es zweckmäßig, den Schalter Sp durch eine verstärkende Prüfeinrichtung Pr zu steuern, die ihrerseits durch einen Prüfbefehl PB gesteuert wird.

In Figur 3 ist ein Beispiel für die beiden ersten Stromquellen gezeigt. Er enthält in den Transistorkaskaden Ka, Kb Regeltransistoren T3, T1, die bei Übersteuerung, d.h. bei Noch-nicht-Abheben des Teilnehmers, in ihren stark gesättigten Zustand gesteuert werden. Bei Sättigung liefern sie, wie später noch erläutert wird, entsprechende, die Sättigung anzeigende Signale SU über T4, T2 an die Übersteuerungsüberwachungseinheit SU. Weitere Details werden weiter unten angegeben.

Der Aufbau der zweiten Stromquellen S2a, S2b kann an sich gleich wie der in Figur 3 gezeigte Aufbau der ersten Stromquellen S1a, S1b sein, jedoch mit dem Unterschied, daß an den in Figur 3 gezeigten Ausgang a' nicht die erste Ader a, sondern die zweite Ader b, und an den in Figur 3 gezeigten Ausgang b' nicht die zweite Ader b, sondern die erste Ader a angeschlossen wird, vgl. Figur 2.

Im folgenden soll der Aufbau und die Arbeitsweise der in Figur 3 gezeigten ersten Stromquellen noch ausführlicher beschrieben werden.

Die erste Stromquelle S1a enthält einen Hilfsspannungsgeber UHa, einen dritten Operationsverstärker OP3, einen Pegelschieber PS, eine Indikationsstelle INa und eine Transistorkaskade Ka.

Die erste Stromquelle S1b enthält einen Hilfsspannungsgeber UHb, ferner einen ersten Operationsverstärker OP1, der z.B. von der in Figur 2 angedeuteten Rufschaltung RS gesteuert wird, einen zweiten, von OP1 gesteuerten Operationsverstärker OP2, eine Indikationsstelle INb und eine Transistorkaskade Kb.

Die Bauelemente R5, R6, T5, T6 im Hilfsspannungsgeber UHb sowie die Bauelemente R7, R8, T7, T8 im Hilfsspannungsgeber UHa erzeugen Hilfsspannungen für die Operationsverstärker OP1, OP2, OP3. Die vom ersten Operationsverstärker OP1 und von dem Hilfsspannungsgeber UHb erzeugten Spannungen bzw. Ströme werden über den Pegelschieber PS mit einem veränderten Spannungspegel an den Hilfsspannungsgeber UHa zur Steuerung des OP3 weitergeleitet.

Dem ersten Operationsverstärker OP1 wird über R1 der Taktimpuls TI direkt, oder über ein den Taktimpuls TI hinsichtlich Amplitude, Form und/oder Dauer beeinflussendes Zwischenglied, zugeleitet. Der innere Aufbau der Operationsverstärker OP1, OP2, OP3 ist dabei derart, daß die an die Anschlüsse a', b' von den Transistorkaskaden Ka, Kb gelieferten eingeprägten Ströme ISa, ISb direkt proportional zu der dem Bauelement R1 über RS zugeführten Spannung ist, solange der Regeltransistor T1, T3 in seinem aktiven Bereich statt in seinem Sättigungsbereich arbeitet. Es gilt nämlich für R2 = R3 und R4 = R9 die Beziehung $ISa = ISb = (US \cdot R2) / (R1 \cdot R4)$.

Der Pegelschieber PS wurde insbesondere deswegen angebracht, um die Betriebsspannungen für OP3 zu erniedrigen. Es sind nämlich relativ hohe Betriebsgleichspannungen 0V, -60V zugeführt, um hohe Energien der Rufstromimpulse zu erreichen. Auch die Transistorkaskaden Ka, Kb verändern den Spannungspegel der eingeprägten Ströme ISa, ISb, so daß diese Transistorkaskaden Ka, Kb ebenfalls die Spannungsfestigkeit der in Figur 5 gezeigten Stromquellen erhöhen.

Im eingehängten Zustand der an die Anschlüsse a', b' angeschlossenen Teilnehmerstation kann während des Rufens nicht der eingeprägte Strom ISa, ISb während der ganzen Dauer des betreffenden Rufstromimpulses fließen. Bei Übersteuerung des Regeltransistors T1, T3 wird daher über die Anschlüsse a', b' während des betreffenden Rufstromimpulses entweder kein Strom oder ein zu kleiner Strom fließen. Dann gehen also die Regeltransistoren T1, T3 von ihrem aktiven Zustand in ihren übersteuerten, hier in ihren Sättigungszustand über, da diese Regeltransistoren nicht mehr fähig sind, den eingeprägten Strom ISb, ISa, z.B. gegen Ende des betreffenden Taktimpulses, in seiner vollen Amplitude aufrecht zu erhalten.

Den Sättigungszustand der Regeltransistoren T1, T3 erkennen die Transistoren T2, T4 in den Indikationsstellen INb, INa. Diese Indikationsstellen haben also die Aufgabe, Signale SU an die Leitungen lb, la abzugeben, die als Kriterium für den Eingangszustand der Teilnehmerleitung dienen. Sobald nämlich die Regeltransistoren T1, T3 in den Indikationsstellen INb, INa in ihren gesättigten
Zustand übergehen, werden die Transistoren T2, T4 dieser
Indikationsstellen leitend, wodurch die Einheit SU den
Sättigungszustand der Regeltransistoren T1, T3 gemeldet
erhält.

Es ist bekannt, daß auf der ersten Ader und zweiten Ader
eine Längsspannungsbeeinflussung auftreten kann. In der
englischsprachigen Literatur werden solche Längsspannungen als longitudinale Signale bzw. als Common-Mode-Signale bezeichnet. Solche Längsspannungen stören das in Figur 3 gezeigte Ausführungsbeispiel der beiden ersten
Stromquellen S1a, S1b nur wenig, weil die Stromquellenausgänge durch Transistoren gebildet werden, vergleiche
die Transistorkaskaden Ka, Kb an den Ausgängen a', b' in
Figur 3, und weil diese Längsspannungen, insbesondere deren höherfrequente Komponenten, an den Ausgängen a', b'
der Stromquellen S1a, S1b, S2a, S2b auftreten. Diese
Stromquellenausgänge sind nämlich nicht nur gleichstrommäßig hochohmig, sondern auch wechselstrommäßig hochohmig, vgl. in gleichstrommäßiger Hinsicht die in Figur 2
gezeigten 10k in der Einspeiseeinrichtung EE, sowie in
dynamischer Hinsicht die in Figur 3 gezeigten Transistorkaskaden Ka, Kb.

Diese Längsspannungen stören außerdem die Feststellung
der Übersteuerung der Stromregeleinheit, vergleiche T1,
T3 in den Transistorkaskaden Ka, Kb in Figur 3 nur wenig,
weil nur ein geringer Anteil der mit den induzierten
Längsspannungen verbundenen Längsströme über die Ausgänge a', b' der Stromquellen fließen. Stattdessen fließen
bei diesem Beispiel die Längsströme, insbesondere auch
deren hochfrequente Komponenten, weitgehend über die in
Figur 2 gezeigten ohmschen Widerstände 10k.

Es hat sich als besonders günstig erwiesen, getrennt die Übersteuerung der Stromregeleinheiten der ersten und der zweiten Adern festzustellen. Die Figuren 2 und 3 zeigen ein solches Beispiel, bei dem die Signale SU der beiden ersten Stromquellen S1a, S1b über getrennte Leitungen 1a, 1b, an eine z.B. durch ein Verknüpfungsglied gebildete Übersteuerungsüberwachungseinheit SU geliefert werden. Dadurch kann diese Einheit SU neben dem Abheben bzw. Noch-nicht-Abheben des Teilnehmers auch Erdschlüsse, Kurzschlüsse zu spannungsführenden Leitungen, oder Kabelbrüche auf den Adern feststellen. In den zuletzt genannten Fällen wird nämlich nur über eine der beiden Leitungen 1a, 1b ein die Übersteuerung anzeigendes Signal geliefert, aber nicht gleichzeitig über die andere dieser beiden Leitungen. In diesem Falle kann die Einheit SU, z.B. mittels eines Exklusiv-Oder-Gliedes, ein solchen unsymmetrisch auftretenden Störungen entsprechendes Unsymmetriesignal erzeugen.

Auch die im folgenden beschriebenen Weiterbildungen wurden insbesondere für ein PCM-Fernsprech-Vermittlungssystem entwickelt, in dessen Ämter durch Großintegration hergestellte Dekodierer und 2-Draht/4-Draht-Gabelschaltungen angebracht sind, an die Teilnehmerstationen in der Umgebung des jeweiligen Amtes über teils lange, teils kurze Teilnehmerleitungen angeschlossen sind. Sie eignen sich aber auch für andere Vermittlungssysteme bzw. Ämter, z.B. auch für analoge Signale übertragende Systeme, selbst wenn sie keine Gabelschaltung enthalten.

Die Übersteuerung der Stromregeleinheit tritt auch bei diesen Verfahren ein, wenn der Eingangswiderstand der Teilnehmerleitung, gesehen von der hochohmigen Gleichstromquelle, wegen des Noch-Nicht-Abhebens des Teilnehmers besonders hoch ist, so daß, zumindest während eines Teils der Dauer des Rufstromimpulses, die Stromregeleinheit der Stromquelle, z.B. mindestens ein Transistor dieser Einheit, wegen Übersteuerung nicht mehr die Stromquelle veranlassen kann, den momentanen Rufstrom mit der vollen Amplitude von Strom und Spannung in die Teilnehmerleitung einzuspeisen. Diese Übersteuerung bzw. Nichtübersteuerung der Stromregeleinheit bildet also das Kriterium dafür, ob der Teilnehmer abhob oder nicht. Falls nämlich der Teilnehmer abhob, fließt der Rufstrom mit einer verminderten Spannung zwischen den Teilnehmerleitungsadern, so daß dann die Stromregeleinheit in ihrem aktiven, nicht übersteuerten Bereich betrieben wird.

Oben wurde bereits darauf hingewiesen, daß die Toleranzen für die zulässigen Teilnehmerleitungslängen bzw. für die Teilnehmerstations-Eingangswiderstände durch den zeitlichen Verlauf von Spannungen bzw. Strömen jedes Rufstromimpulses beeinflußt sein können. Je größer nämlich die Toleranz des Eingangswiderstandes der Teilnehmerstation, und je länger und je inhomogener die Teilnehmerleitung ist, umso verschiedener werden die Laufzeiten bzw. der zeitliche Verlauf der Spannung oder Ströme jedes Rufstromimpulses auf den Adern der Teilnehmerleitung. Der Anwendung solcher Einspeiseeinheiten in Ämtern bzw. Systemen sind daher oft unangenehme enge Grenzen durch die zulässigen Toleranzen, insbesondere von Länge und Widerstand der Adern zur Teilnehmerstation, und durch die zulässigen Toleranzen der Eingangswiderstände insbesondere der Teilnehmerstation im aufgelegten Zustand gesetzt. Es ist daher, erstrebenswert, eine unnötige Verkleinerung solcher Toleranzen zu vermeiden. Die gleiche Einspeiseeinheit soll also für möglichst verschiedene Teilnehmerleitungslängen bei weiten Toleranzen der Eingangswiderstände der Teilnehmerstationen einsetzbar sein.

Oben wurde außerdem bereits darauf hingewiesen, daß durch kapazitive Kopplungen, auch durch induktive Kopplungen, Störungen anderer, zur betreffenden Teilnehmerleitung benachbarter Teilnehmerleitungen, sowie von den benachbarten Teilnehmerleitungen auf die betreffende Teilnehmerleitung, besonders durch die hochfrequenten Komponenten von Rufstromimpulsen auftreten können. Oben wurde daher die Einspeisung über zwei erste und zwei zweite Stromquellen empfohlen, da dann eine weitgehende Vermeidung bzw. Kompensation solcher Störungen bzw. Kopplungen erreichbar ist. Unter den verschiedenen Kopplungen stört am meisten die Kopplung der höherfrequenten Frequenzkomponenten von energiereichen Rufstromimpulsen, die die zu übertragenden Empfangsinformationen beeinträchtigen. Die Kopplungen bewirken aber auch Verzerrungen im Verlauf der Rufstromimpulse. Diese zuletzt genannte Anbringung von mehreren statt nur einer einzigen Stromquelle ist ebenfalls bei der Weiterbildung zur noch stärkeren Vermeidung solcher Störungen bzw. Kopplungen möglich, wie
später an einem Ausführungsbeispiel gezeigt wird.

Je größer jedoch die Energie jedes einzelnen Rufimpulses ist und je länger die betreffende Teilnehmerleitung
ist, umso größer ist an sich die Gefahr von Störungen
durch Kopplungen, sowie durch Laufzeiten und Einschwingvorgänge auf der betreffenden Teilnehmerleitung.

Durch die DE-AS 25 56 157 ist bereits bekannt, bei einem
Verfahren zur spulen-, relais- und transformatorfreien
Rufstrom- und Schleifenstromeinspeisung in eine zweiadrige, an die 2-Drahtseite einer transformatorfreien
2-Draht/4-Draht-Gabelschaltung angeschlossene Teilnehmerleitung eine gesteuerte Konstantstromquelle zu verwenden,
welche sinusähnliche Rufstromimpulse, nämlich jeweils
Sinushalbwellen, in die Teilnehmerleitung einspeist.

Die Aufgabe der zunächst beschriebenen Weiterbildung
ist, die Toleranzen für die Teilnehmerleitungslänge bzw.
für den Teilnehmerstations-Eingangswiderstand weiter zu
vergrößern bzw. nicht mehr zu beeinträchtigen. Dazu sollen die Amplituden der beim Rufen durch Kopplungen zwischen benachbarten Teilnehmerleitungen bewirkten Störungen sowie die Amplituden der Einschwingvorgänge auf der
betreffenden Teilnehmerleitung dadurch verringert werden, daß die Stromquelle die Rufstromimpulse jeweils mit
einem sinusähnlichen zeitlichen Verlauf einspeist. Es
werden also insbesondere Rechteck-Rufstromimpulse, extrem
steile hohe Flanken und stark ausgeprägte Ecken im zeitlichen Verlauf des einzelnen Rufstromimpulses möglichst
vermieden. Wegen des dann geringeren Anteils an höherfrequenten Komponenten der nach der Fourier-Analyse betrachteten Rufimpulse sind nämlich die Amplituden der
Einschwingvorgänge und Kopplungen stark vermindert, was
die Toleranzen für die Teilnehmerleitungslänge und für
den Teilnehmerstations-Eingangswiderstand vergrößert.

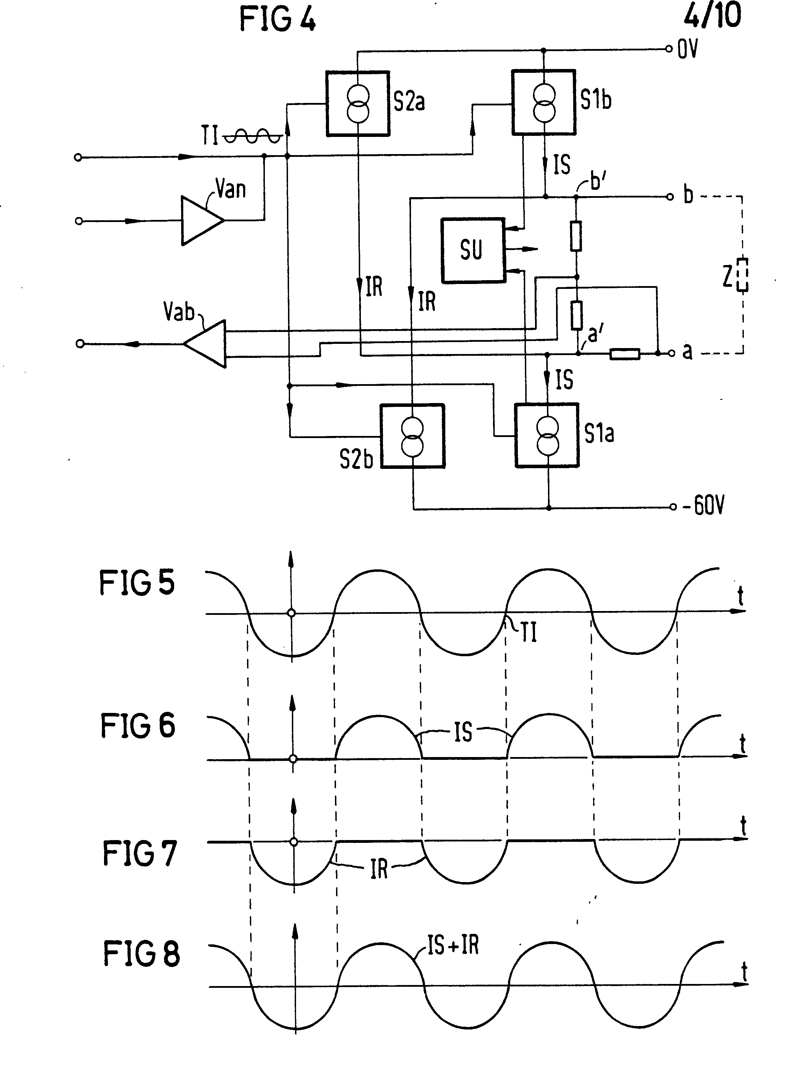

Fig. 4 zeigt eine, vier gesteuerte hochohmige Stromquelle S1a, S1b, S2a, S2b enthaltende Einspeiseeinheit,
welche über die Widerstandsbrücke einer 2-Draht/4-Draht-
Gabelschaltung den Rufstrom und den Schleifenstrom zur
durch Z symbolisierten Teilnehmerstation einspeist.

Den Steuereingängen der vier Stromquellen werden z.B.
die in Fig. 5 gezeigten Rufstromgenerator-Taktimpulse
TI zugeleitet. Diese Taktimpulse TI stellen hier volle
Sinuswellen dar. Die Steuereingänge der Stromquellen
sind hier so betrieben, daß nur jeweils die positive
oder negative Halbwelle die betreffende Stromquelle in
ihren aktiven Bereich steuert, in welchem jeweils ein
in Fig. 6 und 7 gezeigter Sinushalbwellen-Rufstromimpuls von der betreffenden Stromquelle in die Teilnehmerstation Z eingespeist wird. Während der anderen Halbwelle ist die betreffende Stromquelle jeweils gesperrt
und speist keinen Strom in die Teilnehmerstation Z ein,
wie in Fig. 6 und 7 gezeigt ist.

Es handelt sich hier um eine Einspeiseeinheit mit vier
Stromquellen, von denen jeweils zwei erste Stromquellen
S1a, S1b gleichzeitig Rufstromimpulse der ersten, in
Fig. 6 gezeigten Polarität IS einspeisen und von denen
die zwei anderen zweiten Stromquellen S2a, S2b während
der Inaktivität der ersten Stromquellen S1a, S1b Rufstromimpulse der zweiten, in Fig. 7 gezeigten Polarität
IR einspeisen. Wie in Fig. 8 gezeigt ist, überlagern
sich die Rufstromimpulse aller Stromquellen zu einer
bipolaren, sinusvollwellenförmigen Rufstromimpulsfolge.
Diese in Fig. 8 gezeigte Impulsfolge weist einen besonders geringen Oberwellengehalt auf - im Idealfall sogar
gar keine Oberwellen, weswegen hier die Einschwingvorgänge und die Kopplungen zwischen benachbarten Teilnehmerleitungen und entsprechend ein störendes Nebensprechen besonders gering sind. Ein solches Betriebsverfahren ist also besonders störungssicher und gestattet besonders große zulässige Toleranzen für die Teilnehmerleitungslänge und für den Teilnehmerstations-Eingangswiderstand.

Für viele Fälle genügt bereits die oft schon ausreichend
hohe zulässige Toleranz, die erreicht wird, wenn nur
eine einzige Stromquelle, z.B. S1a, in der Einspeiseeinheit enthalten ist, wenn diese Stromquelle eine Sinushalbwelle oder auch nur einen ähnlichen Rufstromimpuls
mit nicht zu steilen, hohen Flanken und nicht zu vielen
scharfen, starken Ecken insbesondere im Bereich hoher
absoluter Stromamplitudenwerte, aufweist. Es genügt also bereits, daß die einzelne Stromquelle einen irgendwie sinusähnlich geformten Rufstromimpuls einspeist.

Auch wenn mehrere, insbesondere vier Stromquellen in der Einspeiseeinheit enthalten sind, genügt oft, die störenden höherfrequenten Oberwellenanteile der Rufstromimpulse dadurch herabzusetzen, daß die betreffenden Stromquellen irgendwie sinusähnlich geformte Rufstromimpulse einspeisen. Je geringer die höherfrequenten Oberwellenanteile sind, umso größere Toleranzen für die Teilnehmerleitungslänge und für den Teilnehmerstations-Eingangswiderstand können zugelassen werden.

Die Teilnehmerstation hat für solche oberwellenarmen sinusähnlichen Rufstromimpulse ebenfalls mehr oder weniger lineare Eigenschaften, indem die Teilnehmerstation selbst im allgemeinen nicht so starke Oberwellen aus den eingespeisten Rufstromimpulsen erzeugt, daß der Oberwellenanteil und damit die Einschwingvorgänge und Kopplungen sehr störend die Toleranzen vermindern. Bei der Einspeisung der in Fig. 8 gezeigten bipolaren Sinusvollwellen-Rufstromipulsfolge werden also, zumindest bei ausreichend linear arbeitenden Teilnehmerstationen, die Oberwellenanteile gering bleiben und damit besonders große Toleranzen zulässig sein.

Im Zeitabschnitt, in dem die Übersteuerung der Stromregeleinheit auftritt, sollen die Einschwingvorgänge schon stark oder ganz abgeklungen sein. Wären nämlich im Zeitabschnitt der Übersteuerung noch stärkere Einschwingvorgänge wirksam, würde die Übersteuerung bereits durch Einschwingvorgänge auftreten, statt wie beabsichtigt nur durch das Noch-nicht-Abheben des Teilnehmers. Einschwingvorgänge - ähnlich auch Kopplungen zwischen benachbarten Teilnehmerleitungen - können daher an sich

0006583

vortäuschen, daß der Teilnehmer noch nicht abhob, obwohl er abhob, oder sogar auch vortäuschen, daß der Teilnehmer abhob, obwohl er nicht abhob.

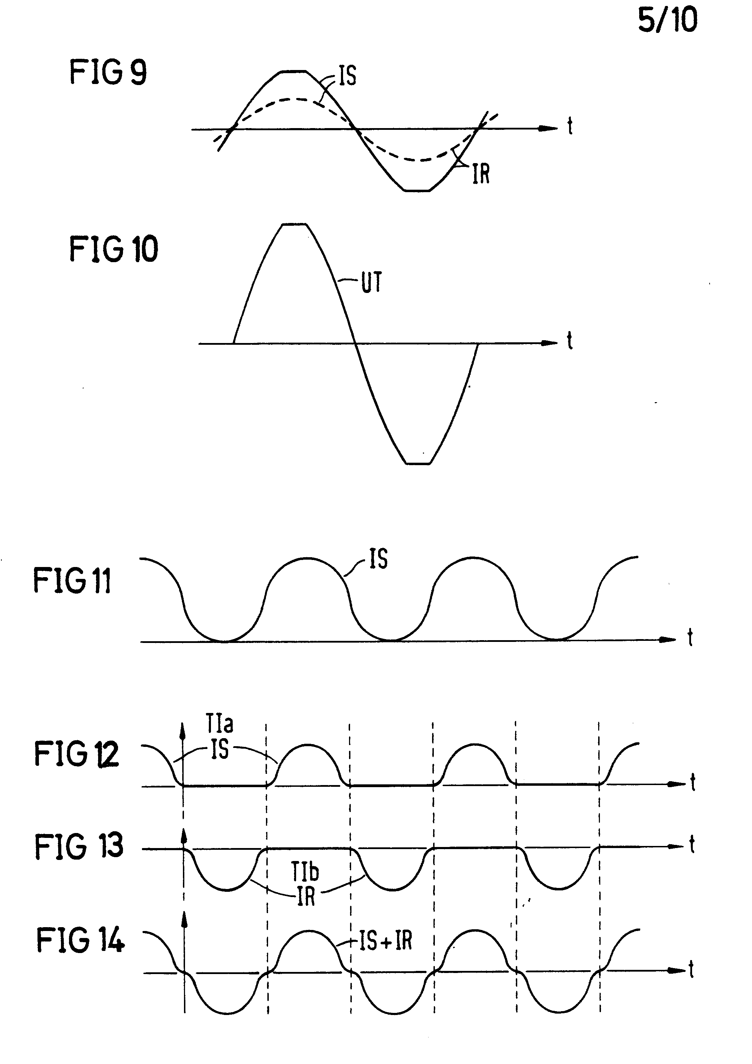

Die oberwellenarmen Sinus-Rufstromimpulse haben den weiteren Vorteil, daß die nicht mehr vermiedenen, restlichen Einschwingvorgänge bereits weitgehend abgeklungen sind, sobald - etwa im Bereich der Sinusmaxima - die Übersteuerung der Stromregeleinheit der betreffenden Stromquelle eintritt, vgl. Fig. 9 und 10. Die Übersteuerung tritt also nicht schon wegen zu hoher Amplituden der Einschwingvorgänge oder gar wegen zu hoher Amplituden der von benachbarten Teilnehmerleitungen eingekoppelten Störungen auf, sondern wirklich nur wegen des Noch-nicht-Abhebens des Teilnehmers, wobei diese Übersteuerung nur angenähert im Bereich der Sinusmaxima auftritt. Diese übersteuerten Sinusmaxima treten ja erst eine beachtliche Zeitspanne nach dem Beginn des betreffenden Rufstromimpulses, z.B. 10 msec später, auf, so daß innerhalb dieser Zeitspanne alle nicht mehr vermiedenen restlichen Einschwingvorgänge jedenfalls so weitgehend abgeklungen sind, daß durch die Übersteuerung echt das Noch-nicht-Abheben des Teilnehmers angezeigt, statt ein Noch-nicht-Abheben nur vorgetäuscht wird. Sobald der gerufene Teilnehmer abhob, verringert sich der Teilnehmerstations-Eingangswiderstand, so daß in diesem abgehobenen Zustand Rufstromimpulse mit verringerten Spannungen zwischen den 2-Drahtseite-Anschlüssen a, b, vgl. Fig. 4, fließen. In Fig. 9 ist gezeigt, daß entsprechend der gestrichelten Linie nach dem Abheben keine Übersteuerung der Stromregeleinheiten durch die Rufstromimpulse mehr eintrifft, daß aber entsprechend der durchgezogenen Linie vor dem Abheben eine Übersteuerung im Bereich der Sinusmaxima durch die Rufstromimpulse eintritt. Das Fehlen der Übersteuerung bewirkt, vgl.

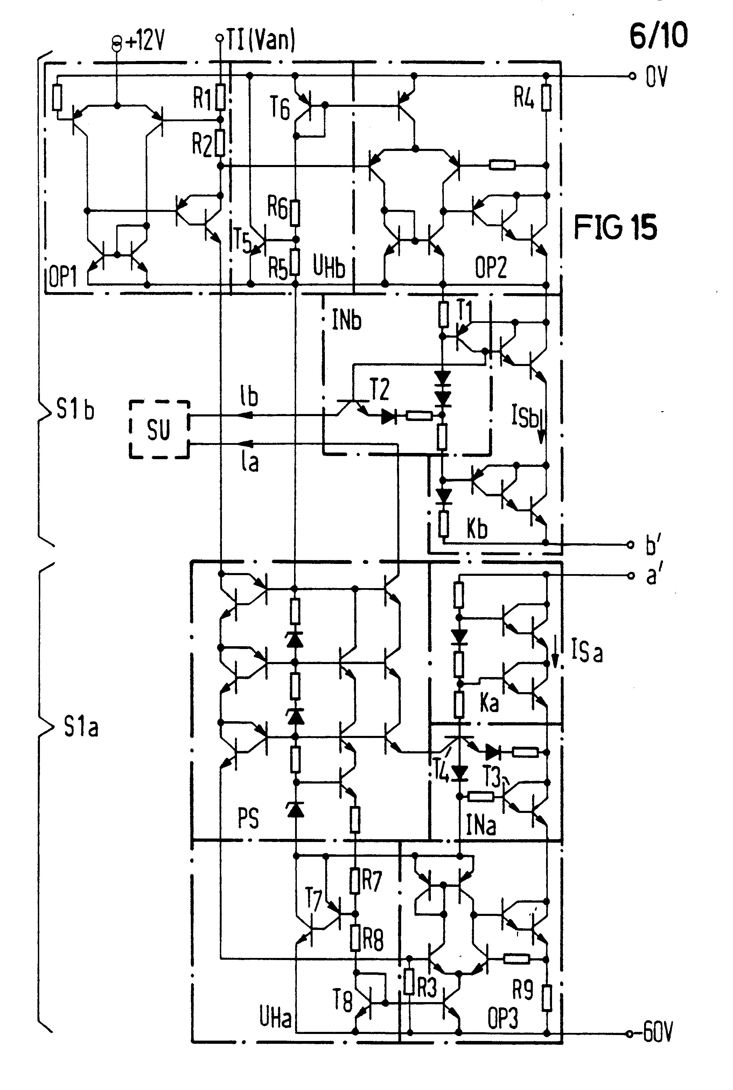

Fig. 15 sowie der Beschreibung von deren Funktionen in
der Hauptanmeldung/Hauptpatent, daß über die Leitungen
1a, 1b an die in Fig. 6 und 3 gezeigte Übersteuerungs-
Überwachungseinheit SU zuverlässig, also unbeeinträchtigt von Einschwingvorgängen und Kopplungen, das Noch-
nicht-Abheben des Teilnehmers gemeldet wird. Um eine
solche zuverlässige Übersteuerungsüberwachung zu erreichen, ist demnach nur nötig, dem in Fig. 15 gezeigten Beispiel von ersten Stromquellen am gezeigten Steuereingang sinusförmige oder sinusähnliche Taktimpulse
TI zuzuleiten. Die Überwachungseinheit SU kann dann bei
Übersteuerung die Fortsetzung der Zuleitung der Sinus-
Taktimpulse TI zulassen und bei Fehlen der Übersteuerung
die Abschaltung dieser Sinus-Taktimpulse TI veranlassen.
Dazu kann das Ausgangssignal z.B. von SU über eine die
Ausgangssignaldauer verlängernde Kippschaltung einem
ersten Eingang eines UND-Gliedes und die Taktimpulse TI
über den zweiten Eingang dieses UND-Gliedes an den
Steuereingang der Stromquelle geleitet werden.

Die Rufstromimpulse IS bzw. IR können, durch eine entsprechend geänderte Steuerung der Stromquellen an deren
Steuereingang, auch einen anderen, sinusähnlichen zeitlichen Verlauf aufweisen. Sie können z.B. gemäß Fig. 12
und 13 abgerundete Ecken bei sehr kleinen Stromamplitudenwerten aufweisen, so daß die Rufstromimpulse angenähert einen glockenförmigen zeitlichen Verlauf aufweisen. Durch Überlagerung der für sich unipolaren, in
Fig. 12 und 13 gezeigten Stromimpulse IS und IR kann man
eine bipolare, in Fig. 14 gezeigte Rufstromimpulsfolge
bilden, deren einzelne Rufstromimpulse jeweils für sich
einen glockenförmigen Verlauf aufweisen. Solche glockenförmigen Rufstromimpulse weisen einen besonders geringen höherfrequenten Oberwellenanteil auf, wodurch die
Einschwingvorgänge unmittelbar nach dem Beginn und nach dem Ende des einzelnen Rufstromimpulses eine besonders
geringe Amplitude aufweisen. Bei der Einspeisung der in
Fig. 14 statt der in Fig. 8 gezeigten bipolaren Folge ist
außerdem günstig, daß an die Genauigkeit der zeitlichen
Bedingungen, unter denen die ersten Stromquellen S1a, S1b
abgeschaltet bzw. aktiviert und die zweiten Stromquellen
S2a, S2b aktiviert bzw. abgeschaltet werden, geringere
Anforderungen zu stellen, weil gewisse zeitliche Überlappungen von IS und IR, und auch gewisse Pausen zwischen
IS und IR, bei bipolaren Folgen gemäß Fig. 14 zulässig,
bei bipolaren Folgen gemäß Fig. 8 aber mehr oder weniger
störende Folgen haben.

Solche oberwellenarmen Rufstromimpulse sind übrigens
selbst dann einspeisbar, wenn die Einspeiseeinheit nur
eine einzige Stromquelle, z.B. S1a, enthält. Dann können die glockenförmigen Rufstromimpulse z.B. den in
Fig. 11 gezeigten zeitlichen Verlauf aufweisen.

Auch die im folgenden beschriebenen Weiterbildungen,
welche vier Stromquellen enthalten, die beim Rufen eine
bipolare Rufstromimpulsfolge über die Teilnehmerleitung
in die Teilnehmerstation einspeisen, wurden insbesondere
für ein PCM-Fernsprech-Vermittlungssystem entwickelt,
in dessen Ämter teilnehmerindividuell durch Großintegration hergestellte (De-)Kodierer und 2-Draht/4-Drahtgabelschal-
tungen angebracht sind, an welche die Teilnehmerstationen
über teils lange, teils kurze Teilnehmerleitungen angeschlossen sind. Sie eignen sich aber auch für andere Vermittlungssysteme bzw. Ämter, z.B. auch für analoge Signale übertragende Systeme, selbst wenn sie keine Gabelschaltung enthalten.

Oben ist beschrieben, daß die Übersteuerung der Stromregeleinheiten bzw. der den Gleichstrom-Innenwiderstand der betreffenden Stromquelle regelnden Regeltransistoren auch getrennt für beide Adern der Teilnehmerleitung durchgeführt werden kann. Man kann dann, wenn nur die Stromregeleinheit der einen der beiden gleichzeitig Strom einspeisenden Stromquellen in ihrem übersteuerten Zustand gesteuert wird, anzeigen, z.B. daß der Teilnehmer die Erdtaste drückte, also an eine der beiden Addrn Erdpotential legte, oder daß ein Kurzschluß gegen Erde oder gegen fremdspannungsführende Leitungen, z.B. gegen 220V/ 380 V, oder ein Aderbruch vorliegt. Die Übersteuerung der einen der beiden Stromregeleinheiten wird dann zur Erzeugung eines die Unsymmetrie der Aderpotentiale anzeigenden Unsymmetriesignals ausgenutzt.

Oben ist bereits auf bestimmte Störspannungen, nämlich Längsspannungen, hingewiesen, welche auf der Teilnehmerleitung z.B. durch kapazitive oder induktive Einkopplungen benachbarter Starkstromleitungen, also insbesondere als 60 Hz-, 50 Hz- und 16 2/3 Hz-Störsignale auftreten können. Solche Störspannungen weisen im allgemeinen eine wenn auch nur kurzseitige, also energiearme, aber hohe Gleichtaktkomponente auf. So sind kapazitiv, aber auch induktiv, in die Teilnehmerleitung eingekoppelte Störspannungen meistens fast reine Gleichtaktstörspannungen, die also das Potential an den beiden Ausgängen der Einspeiseeinheit bzw. an den beiden Teilnehmerleitungsanschlüssen der diese Einspeiseeinheit enthaltenden Gabelschaltung kurzseitig um den gleichen Betrag mit gleichem Vorzeichen verändern.

Gemäß DE-OS 20 20 257, insbesondere Fig. 3 und 4 ist an eine Einspeiseeinheit eine Entstöreinheit angeschlossen, die Störungen durch solche Längsspannungen zu vermeiden gestattet. Die Entstöreinheit wird dort durch einen einstufigen Verstärker gebildet, der an seinem Eingang von der Spannungsdifferenz gesteuert wird, die zwischen dem Abgriff eines ersten, zwischen den Teilnehmerleitungsanschlüssen angeschlossenen Spannungsteilers und dem Abgriff eines zweiten, zwischen den die Stromquellen der Einspeiseeinheit mit Strom versorgenden Versorgungsanschlüssen angeschlossenen Spannungsteilers auftritt. Die Stromquellen sind dort Konstantstromquellen, die den Schleifenstrom einspeisen und deren Innenwiderstand zusätzlich von der Entstöreinheit, d. h. von jenem Verstärker, gegenkoppelnd so gesteuert wird, daß die die Entstöreinheit steuernde, selbst minutenlang andauernde Spannungsdifferenz nahezu verschwindet. Dadurch können die Gleichtaktkomponenten der kurzzeitigen Längsspannungen weitgehend kompensiert werden, so daß keine störende Dämpfung mehr durch die mit hoher Störspannung belastete eine Stromquelle erzeugt wird, indem die Symmetrie der Potentiale auf den Adern der Teilnehmerleitung ausreichend wiederhergestellt wurde. Es wird nämlich eine Entstörung des Informationsflusses auf der Teilnehmerleitung erreicht, indem die Längsspannung nicht mehr die eine der beiden gleichzeitig Strom einspeisenden Stromquellen selbst in die Sättigung, also in einen solchen Arbeitspunkt steuert, in welchem ihr Wechselstrominnenwiderstand recht klein wird, was die Wechselstromkomponenten der Informationssignale auf der Teilnehmerleitung unangenehmerweise dämpfen würde.

Bei der im folgenden erläuterten Weiterbildung der Erfindung wird jedoch die Stromregeleinheit solcher Stromquellen absichtlich dazu übersteuert, um eine Anzeige über den Zustand der Teilnehmerstation zu erzeugen, jedenfalls während bestimmter Zeiten.

Bei der Weiterbildung wird ebenfalls zu diesen in der DE-OS 20 20 527 angegebenen Zwecken eine solche Entstöreinheit bei den beiden gleichzeitig Strom einspeisenden Stromquellen angebracht. Bei den besondere Stromregeleinheiten enthaltenden Stromquellen der Erfindung hat diese Entstöreinheit darüberhinaus den Vorteil, daß die die Gleichtakt-Komponente der Störspannungen nicht mehr die Stromregeleinheiten der Stromquellen übersteuert und so nicht mehr eine Fehlanzeige über den Zustand der Teilnehmerstation auslöst, insbesondere so die Fehlanzeige auslöst, der Teilnehmer hätte noch nicht abgehoben bzw. wieder eingehängt. Auch ein Unsymmetriesignal, z.B. wegen Erdtastendruck des Teilnehmers oder wegen Aderbruch, wird bei der Erfindung durch Übersteuerung der Stromregeleinheit einer Stromquelle erst dann erzeugt, wenn trotz Kompensationsversuche der Entstöreinheit eine Symmetrie der Potentiale auf den Adern nicht mehr erreicht wird. Wenn nämlich die Entstöreinheit nicht nur die Eigenkapazitäten der Adern so aufladen muß, um die Symmetrie wieder herzustellen, sondern wenn der Einfluß, z.B. eines unsymmetrisch niederohmig vorhandenen Kurzschlusses einer Ader gegen Erde oder Fremdspannung, von der Entstöreinheit nur mit nicht vorhandener, extrem hoher Leistung zu kompensieren wäre, ist die Entstöreinheit überfordert - in diesem Kurzschlußfall wird, nach dem erfolglosen Kompensationsversuch der Entstöreinheit, die Übersteuerung der Stromregeleinheit der betreffenden Stromquelle eine bleibende Unsymmetrie anzeigen, also z.B. den Erdtastendruck des Teilnehmers anzeigen. Die Entstöreinheit entstört also bei der Weiterbildung

0006583

hinsichtlich der störenden Längsspannungen, z.B. bez.
Starkstromeinflüssen, ohne die Überwachung des Teilnehmers und seiner Leitung zu verhindern.

Die Weiterbildung geht also aus von dem im Anspruch 2
angegebenen Verfahren zur spulen-, relaiskontakt- und
transformatorfreien Rufstrom - und Schleifenstromeinspeisung. Die beschriebenen Vorteile werden dadurch erreicht, daß eine Entstöreinheit - gesteuert von der
Spannungsdifferenz zwischen einem Abgriff eines ersten,
zwischen den Teilnehmerleitungsanschlüssen angeschlossenen Spannungsteilers und einem Abgriff eines zweiten,
zwischen den die Stromquellen mit Strom versorgenden Versorgungsanschlüssen angeschlossenen Spannungsteilers -
zwei gleichzeitig Rufstrom- bzw. Schleifenstrom einspeisen, gesteuerte Stromquellen, deren Übersteuerung während
der Einspeisung geprüft wird, gegenkoppelnd so steuert,
daß die die Entstöreinheit steuernde Spannungsdifferenz
vermindert wird.

Die Fig. 15 ist weitgehend identisch mit Fig. 3, weshalb
hier nur noch auf die durch die Erfindung bedingten Besonderheiten eingegangen wird.

Zwischen den Teilnehmerleitungsanschlüssen a und b ist ein erster Spannungsteiler, hier im Beispiel aus unter sich gleichen ohmschen Widerständen R10, angeschlossen. Am Abgriff zwischen den beiden Widerständen R10 liegt also ein Potential, das in diesem Beispiel den Mittelwert der Potentiale Ua, Ub am dem Anschlüssen a und b darstellt.

Die Stromquellen S1a, S1b, auch S2a, S2b, werden von außen, z.B. von einer Batterie eines Vermittlungsamtes, über ihre Versorgungsanschlüsse 0V/-60V mit dem benötigten Strom versorgt. Zwischen diesen Versorgungsanschlüssen 0V/-60V ist auch ein zweiter Spannungsteiler, hier im Beispiel wieder aus zwei unter sich gleichen ohmschen Widerständen R20, angeschlossen. Am Abgriff zwischen den beiden Widerständen R20 liegt also ein Potential, das in diesem Beispiel den Mittelwert der Potentiale 0V/-60V an den Versorgungsanschlüssen darstellt.

Die Abgriffe beider Spannungsteiler sind mit den Eingängen einer Entstöreinheit ES verbunden, die durch eine nichtverstärkende Meßeinrichtung, aber bevorzugt durch einen Differenzverstärker mit einer oder mit mehreren Verstärkerstufen gebildet sein kann. Das Ausgangssignal steuert die gerade Strom in die Teilnehmerleitung einspeisenden Stromquellen, hier im Beispiel S1a, S1b. An sich können auch die beiden anderen Stromquellen S2a, S2b durch dieselbe oder durch eine weitere Entstöreinheit so gesteuert werden. Wesentlich ist, daß zumindest solche Stromquellen, deren Stromregeleinheit zur Überwachung des Teilnehmerstationszustandes auf Übersteuerung geprüft wird, durch eine solche Entstöreinheit gesteuert werden. Da diese Stromquelle ohnehin die geprüfte Stromregeleinheit enthält, die ihrerseits auch den Gleichstrominnenwiderstand bzw. die Amplitude des eingespeisten Stromes, abhängig von den diese Stromquelle steuernden Steuersignalen, regelt, kann das Ausgangssignal der Entstöreinheit ES auch unmittelbar, oder über Pegelschieber, Zenerdioden bzw. Zwischenverstärker, dieser Stromregeleinheit der betreffenden Stromquelle zugeleitet werden. Man hat dann einen besonders einfachen Aufbau zur Durchführung Das analoge Ausgangssignal, z.B. Q, der Entstöreinheit ES wird gegenkoppelnd so den betreffenden Stromquellen zugeleitet, daß das Potential am Abgriff des ersten Spannungsteilers R10/R10 nahezu gleich dem Potential am Abgriff des zweiten Spannungsteilers R20/R20 wird, so daß also die die Entstöreinheit ES steuernde Spannungsdifferenz zwischen diesen beiden Abgriffen nahezu verschwindet. Durch die Gegenkopplung werden also die beiden betreffenden, gleichzeitig Strom einspeisenden Stromquellen S1a, S1b veranlaßt, ihre Ströme mit einem solchen Potential an den Anschlüssen a, b abzugeben, daß der Mittelwert der Potentiale an den Anschlüssen a und b jeweils angenähert gleich bleibt, nämlich gleich dem Potential am Abgriff des zweiten Spannungsteilers R20/R20 bleibt, selbst falls,

Störspannungen, nämlich Gleichtakt-Längsspannungen, über die Teilnehmerleitung den Anschlüssen a und b zugeleitet werden. Die Weiterbildung gestattet also, diese Störspannungen zu kompensieren, d.h. das am Abgriff des ersten Spannungsteilers R10/R10 auftretene Potential zu stabilisieren.

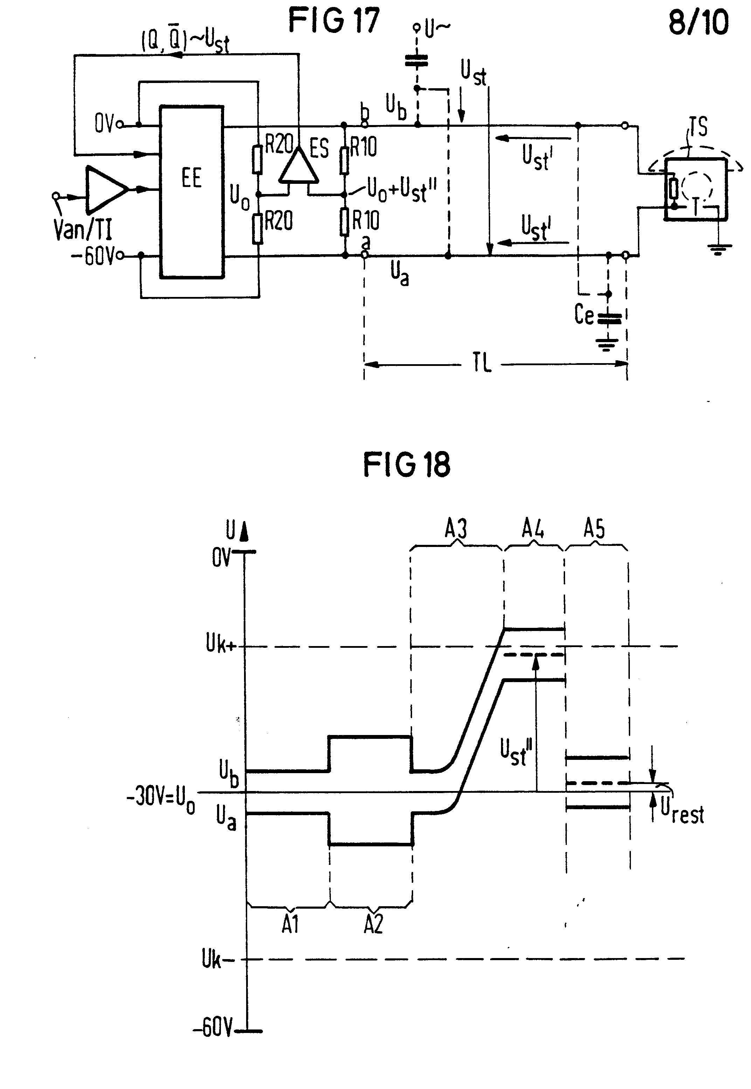

Dies soll anhand von Fig.17 weiter erläutert werden. Gezeigt ist schematisch die die Stromquellen enthaltende Einspeiseeinheit EE, deren Stromquellen

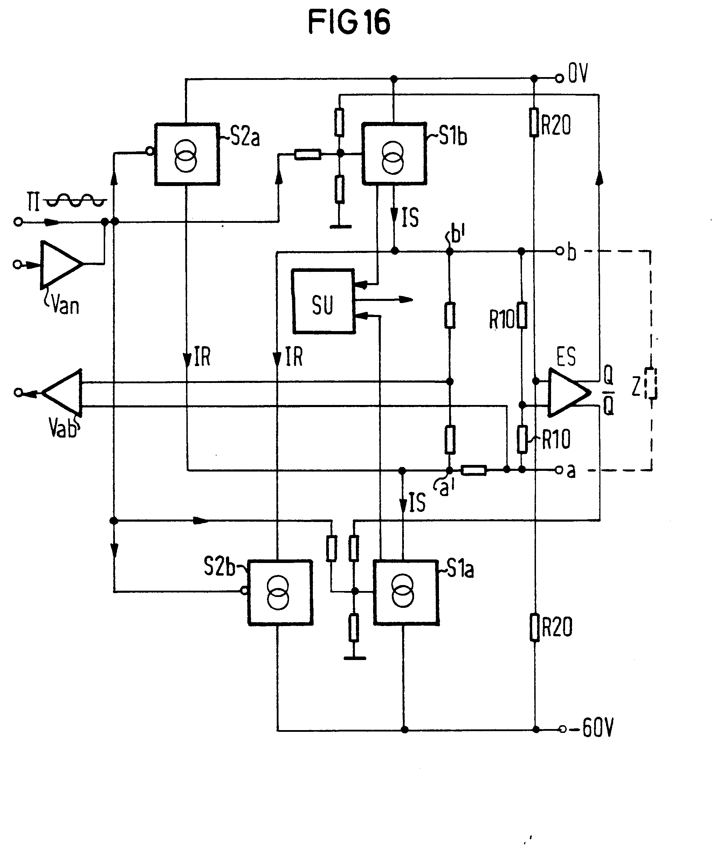

durch Steuersignale TI bzw. durch TI überlagerte empfangene, an den Teilnehmer TS weiterzuleitende Informationssignale, vgl. Van, gesteuert werden. Jeweils zwei der vier Stromquellen S1a, S2a, S1b, S2b, vgl. Fig.16, der Einspeiseeinheit EE speisen gleichzeitig einen Rufstromimpuls oder den Schleifenstrom in die Teilnehmerleitung TL. Es ist in Fig.17 auch der erste und zweite Spannungsteiler R10/R10 und R20/R20 und die Entstöreinheit ES, gezeigt, die zur Stabilisierung des Mittelwertes Uo der Potentiale Ua,Ub der Anschlüsse a und b, d.h. zur Kompensation der störenden Längsspannungen Ust bzw. Ust' dienen. Diese Längsspannung wird, insbesondere bei starker Verdrillung der Teilnehmerleitung TL, als Gleichtaktspannung, z.B. kapazitiv als Ust oder induktiv als Ust', wie in Fig.17 gezeigt, in den beiden Leitungsadern der Teilnehmerleitung, bevorzugt mit gleicher Amplitude und gleicher Polarität, induziert. Der Betrag der Störspannung hängt insbesondere auch von den Kapazitäten Ce gegen Erde ab und kann gelegentlich zwar sehr hoch sein, z.B. einige kV betragen, liegt aber meistens unter 50 Volt, wobei jedenfalls solche niedrigen Störspannungen von der Erfindung kompensiert werden.

Ist keine Längsspannung vorhanden, dann lägen an den Anschlüssen a, b die Potentiale Ua, Ub, deren Betrag insbesondere von der Länge der Teilnehmerleitung TL und von den Steuersignalen Van, TI abhängt. Während eines Rufimpulses beträgt z.B. Ub = 10 V und Ua = 50 V. Während der Schleifenstromeinspeisung, beträgt sie je nach Amplitude von Van, z.B. Ub = 28 V oder -29 V und Ua = 32 V oder -31 V, vgl. die Abschnitte A1, A2 in Fig. 18. Da keine Längsspannung Ust bzw. Ust' vorhanden ist, liegt an den Abgriffen beider Spannungsteiler R10/R10 und R20/R20 jeweils -30 V = Uo.

Tritt an a und b wegen Ust bzw. Ust' eine Reaktionsspannung Ust" ab Abschnitt A3 in Fig. 18 auf, und steigt z.B. auf Ust" = +10 Volt an, vgl. Abschnitt 4 in Fig. 18, dann liegt, falls keine Entstöreinheit ES vorhanden wäre, beim Rufen statt Ub = -10 V nun 0V und statt Ua = -50 V nun -40 V an, oder bei der Schleifenstromeinspeisung statt Ub = 28 V (-29 V) nun -18 V (-19 V) und statt Ua = -32 V (-31 V) nun -22 V (-21 V), vgl. Abschnitt 4 in Fig. 18. Am Abgriff des zweiten Spannungsteilers R20/R20 liegt weiterhin -30 V, aber am Abgriff des ersten Spannungsteilers R10/R10 statt -30 V nun -20 V, vgl. Ust" in Abschnitt A4 von Fig. 18.

Am Eingang der Entstöreinheit ES, falls sie vorhanden ist, liegt daher eine Spannungsdifferenz, die, in dem gezeigten Beispiel ungedämpft, zunächst gleich dem Betrag der Reaktionsspannung Ust" ist. Die Entstöreinheit ES steuert nun ihrerseits, neben Van bzw. TI, ebenfalls die soeben Strom einspeisenden Stromquellen, und zwar gegenkoppelnd so stark, bis, durch entsprechendes Umladen der Kapazitäten Ce gegen Erde, am Abgriff des ersten Spannungsteilers R10/R10 angenähert wieder Uo = -30V liegt, nämlich bis auf ein Urest, z.B. von 0,2 V Spannung. Dann liegt also z.B. -29,8 V am Abgriff des ersten Spannungsteilers R10/R10, vgl. den Abschnitt A5 in Fig.18. Es liegt also, wegen der Gegenkopplung mittels ES, während der Schleifenstromeinspeisung Ub = 27,8 V (-28,8 V) am Anschluß b, Ua = -31,8 V (-30,8 V) am Anschluß a und ein Potential -30 V + Urest = -29,8 V am Abgriff des ersten Spannungsteilers R10/R10, vgl. den Abschnitt A5 in Fig.18. Am Eingang der Entstöreinheit ES liegt dann nur noch eine sehr verminderte Spannungsdifferenz Urest, welche weiterhin über die Entstöreinheit ES die Kompensation von Ust" bis auf diesen verminderten Restbetrag Urest bewirkt.

Wäre keine Entstöreinheit vorhanden, dann bewirken ausreichend hohe Störspannungen Ust bzw. Ust', daß zumindest die Stromregeleinheit einer der beiden soeben einspeisenden Stromquellen in ihre Übersteuerung gesteuert wird, vgl. die Grenze Uk+ in Abschnitt 4 von Fig. 18. In diesem Falle würde die Übersteuerung der Stromregeleinheit fehlerhafterweise anzeigen, der Teilnehmer hätte z.B. an seiner Station TS die Erdtaste gedrückt, z.B. weil er damit eine besondere Umschaltung im Vermittlungsamt, z.B. eine Weitergabe einer Gesprächsverbindung an einen anderen Teilnhemer, erreichen wollte. In Wahrheit liegt aber nur eine eingekoppelte Störspannung vor. Durch die Kompensation von   Ust" bis auf einen kleinen Rest Urest ist eine solche Fehlanzeige jedoch verhindert, falls eine Entstöreinheit ES vorhanden ist.

Eine  solche Stabilisierung des Potentials Uo am Abgriff des ersten Spannungsteilers R10/R10 gelingt, wenn nur hochohmig eingekoppelte Längsspannungen, z.B. die im Englischen oft Common-Mode-Signale genannten Störsignale, auftreten. Solche Längsspannungen Ust, Ust' treten insbesondere durch benachbarte Starkstromleitungen, z.B. von Eisenbahn und Straßenbahn, auf, die parallel zur Teilnehmerleitung TL verlegt sind. Durch Umladen insbesondere der Eigenkapazität Ce der Teilnehmerleitung TL wird also die Reaktionsspannung Ust" mittels der Entstöreinheit ES kompensiert und stört nicht mehr den Betrieb der Teilnehmerleitung. Insbesondere bewirkt die Störspannung kaum mehr, daß alleine ihretwegen eine Stromregeleinheit, z.B. Regeltransistor, der soeben einspeisenden Stromquellen in ihre Übersteuerung gesteuert wird und so fehlerhaft die Anzeige auslöst, z.B. der Teilnehmer hätte die Erdtaste in seiner Station TS gedrückt, oder auch der Teilnehmer hätte eingehängt. Die Übersteuerung kann z.B. durch Sättigung und/oder völlige Sperrung des Regeltransistors erreicht sein.

Falls der Teilnehmer aber wirklich die Erdtaste seiner Station TS drückt, dann liegt vergleichsweise niederohmig Erdpotential an zumindest einem der Anschlüsse a, b. In diesem Falle ist die von den Stromquellen aufbringbare Leistung viel zu klein, um, gesteuert von der Entstöreinheit ES, am Abgriff des ersten Spannungsteilers R10/R10 wieder angenähert jene -30 V zu erzeugen. Die durch den Erdtastendruck erzeugte anhaltende Unsymmetrie der Potentiale Ua, Ub in Bezug auf die an sich stabilisierte -30 V als Mittelwert von Ua, Ub bewirkt dann aber die Übersteuerung der betreffenden Stromregeleinheit, was ihrerseits, wie gewollt, das Unsymmetriesignal auslöst. Die Entstöreinheit ES beeinträchtigt also nicht die Überwachung des Teilnehmers hinsichtlich Erdtastendruck. Ähnlich ist es bei

niederohmigem Kurzschluß der Teilnehmerleitung TL gegen
Fremdspannung, z.B. gegen -60 V oder 220/380 V, die
ebenfalls unbeeinträchtigt anhand der Übersteuerung der
betreffenden Stromregeleinheit überwacht werden kann.

Falls der Teilnehmer einhängt, wird angenähert Ua =
-60 V und Ub = O V, auch wenn eine Entstöreinheit ES
vorhanden ist, was ebenfalls, wie gewollt, die Übersteuerung der Stromregeleinheit bewirkt. Die Entstöreinheit beeinträchtigt also auch nicht die Überwachung
des Teilnehmers hinsichtlich Einhängen.

Bei Aderbruch wird wenigstens eines der Potentiale
Ua bzw. Ub ähnliche Werte wie nach dem Einhängen des Teilnehmers aufweisen. Auch in diesem Fall ist der eingespeiste Strom der betreffenden Stromquellen zu klein, so
daß deren Stromregeleinheit übersteuert wird, auch
wenn eine Entstöreinheit ES vorhanden ist. Auch die
Überwachung der Teilnehmerleitung auf Aderbruch wird
also durch die Entstöreinheit nicht beeinträchtigt.

Oft kann man mehrere der Stromquellen, insbesondere
zwei davon, durch eine gemeinsame Entstöreinheit, z.B.
durch einen gemeinsamen Differenzverstärker, steuern.
Häufig sind dann aber von der Entstöreinheit zwei in
entgegengesetzte Richtung veränderte, analoge Ausgangssignale, vgl. Q und $\overline{Q}$ in Fig.16 und 17, zu liefern, von
denen das eine die an die erste Ader a und das andere
die an die zweite Ader b angeschlossene, soeben einspeisende Stromquelle steuert. Das ist insbesondere
ratsam bei weitgehend symmetrischem Aufbau der soeben
einspeisenden Stromquellen.

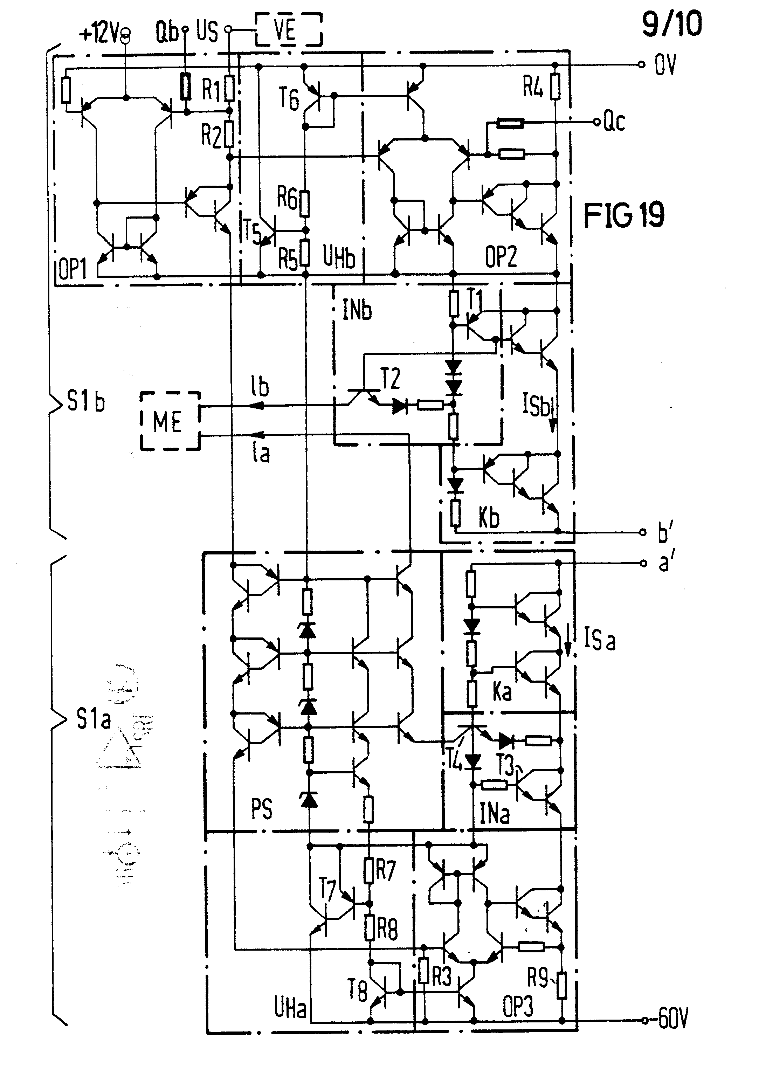

Das wird anhand von Fig. 19 weiter erläuert, das Beispiele der Stromquellen S1a, S1b zeigt. Da sich diese Figur 19 nur geringfügig von der Figur 3 und 15
unterscheidet, muß hier im wesentlichen nur auf die
Besonderheiten eingegangen werden.

An sich werden normalerweise beide Stromquellen S1a,
S1b gleichzeitig über einen einzigen Steuereingang
durch die Steuersignale TI bzw. Van gesteuert. Würde
man also das Ausgangssignal Q oder $\overline{Q}$ alleine über Qb
zuleiten und also unmittelbar am gemeinsamen Steuereingang dem TI bzw. Van gegenkoppelnd überlagern wollen,
dann würde Q oder $\overline{Q}$ beide Stromquellen S1a, S1b bzw.
deren Regeltransistoren T1, T3 weitgehend symmetrisch
so beeinflussen, daß sich zwar die Differenz zwischen
den Potentialen Ua und Ub, vgl. Fig.17, ändert, daß
aber das Potential am Abgriff des ersten Spannungsteilers R10/R10 nahezu unverändert bleibt. Beide Stromquellen S1a, S1b sind also jeweils unsymmetrisch zu
steuern, um zwar die Differenz von Ua und Ub möglichst
wenig zu ändern, um aber das Potential am Abgriff des
ersten Spannungsteilers R10/R10 entsprechend der gewünschten Gegenkopplung zu ändern.

Daher ist es günstig, die analogen, nicht-invertierten
und invertierten Entstöreinheit-Ausgangssignale Q und
$\overline{Q}$ getrennt voneinander zu erzeugen und die eine
Stromquelle mit Q, die andere mit $\overline{Q}$ getrennt zu steuern.
Man kann z.B. Q über den in Fig.19 gezeigten weiteren
Steuereingang Qc der Stromquelle S1b, und $\overline{Q}$ über den in
Fig.19 gezeigten weiteren Steuereingang Qa der Stromquelle S1a zuleiten, und so die gewünschte Kompensation
von Ust erreichen. In diesem Beispiel wird Q und $\overline{Q}$ über
die Operationsverstärker OP2, OP3 zugeleitet, die
gleichzeitig als       weitere, die Gegenkopplung verstärkende und damit Urest verringernde Verstärkerstufen
der Entstöreinheit als auch als Verstärkerstufe für die
überlagerten Steuersignale TI, Van wirken.

An sich kann man aber das Ausgangssignal Q und/oder ein
evtl. auch erzeugtes $\bar{Q}$, der Entstöreinheit auch anderen
Schaltungspunkten des in Fig. 19 gezeigten Stromquellenbeispiels zuleiten. So kann man z.B. damit über Qb sowohl S1a als auch S1b, durch einen Widerstand gedämpft,
steuern und zusätzlich, z.B. über Qa', S1a allein für
sich direkt steuern, was in der Gesamtwirkung bei passender Dimensionierung einer ähnlichen getrennten Steuerung beider Stromquellen entspricht.

Diese Maßnahmen lassen zu, daß die Einspeiseeinheit EE
mit der Entstöreinheit ES, bei Bedarf sogar zusammen mit
der 2-Draht/4-Draht-Gabelschaltung und sogar auch einem
Dekodierer und Kodierer, auf einem gemeinsamen hochintegrierten Monolithen hergestellt wird, so daß die erfindungsgemäße Entstörung mit beachtlich geringem Aufwand
auch bei teilnehmerindividueller Stromversorgung, d.h.
bei Anbringung je eines solchen Monolithen pro Teilnehmerstation TS, erreichbar ist.

Auch die im folgenden beschriebene Weiterbildung wurde
insbesondere für ein PCM-Fernsprech-Vermittlungssystem
entwickelt, in dessen Ämter teilnehmerindividuell Bausteine mit jeweils einem durch Großintegration hergestellten (De-)Kodierer und einer 2-Draht/4-Drahtgabel-
schaltung angebracht sind, an welche 2-drahtseitig jeweils die Teilnehmerstation über eine mehr oder weniger
lange oder kurze Teilnehmerleitung angeschlossen ist.
Sie eignet sich aber auch für andere Vermittlungssysteme
bzw. Ämter, z.B. auch für analoge Signale übertragende
Systeme, selbst wenn sie keine Gabelschaltung und (De-)Kodierer enthalten. Auch hier wird die Stromregeleinheit solcher Stromquellen absichtlich dazu übersteuert, um Anzeigen über den Zustand der Teilnehmerstation zu erzeugen, jedenfalls während bestimmter Zeiten.

Bei der Weiterbildung wird ebenfalls die Entstöreinheit angebracht, um insbesondere zu verhindern, daß die Gleichtakt-Komponente der Störspannungen nicht mehr die Stromregeleinheiten der Stromquellen übersteuert und so nicht mehr eine Fehlanzeige über den Zustand der Teilnehmerstation auslöst, insbesondere so die Fehlanzeige auslöst, der Teilnehmer hätte entgegen der Wirklichkeit nicht abgehoben, oder bereits abgehoben. Auch ein Unsymmetriesignal, z.B. wegen Erdtastendruck des Teilnehmers oder wegen Aderbruch, wird durch Übersteuerung der Stromregeleinheit einer Stromquelle erst dann erzeugt, wenn trotz Kompensationsversuche der Entstöreinheit eine Symmetrie der Potentiale auf den Adern nicht mehr erreicht wird.

Die Aufgabe der Weiterbildung ist, das Verfahren so fortzubilden, daß zusätzlich die durch Herstellungstoleranzen bedingten Fehler der Stromquellen, die eine gleichzeitige Einspeisung von Strömen verschiedener Momentanamplitude, bzw. eine dadurch bedingte Abweichung des mittleren Potentials zwischen den beiden Adern der Teilnehmerleitung vom Sollwert bewirken, selbsttätig kompensiert werden. Die Weiterbildung gestattet daher, die Ausschußquote bei der Herstellung einer solchen Einspeiseeinheit als Monolitz zu verringern, wie später noch erläutert wird.

Diese Aufgabe wird dadurch gelöst, daß die gleiche, oder mindestens eine weitere solche Entstöreinheit alle Rufstrom bzw. Schleifenstrom einspeisenden Stromquellen, deren Übersteuerung während der Einspeisung geprüft wird, sowie alle, deren Übersteuerung während der Einspeisung nicht geprüft wird, gegenkoppelnd so steuert, daß das Potential am Abgriff des ersten Spannungsteilers ununterbrochen stabilisiert wird.

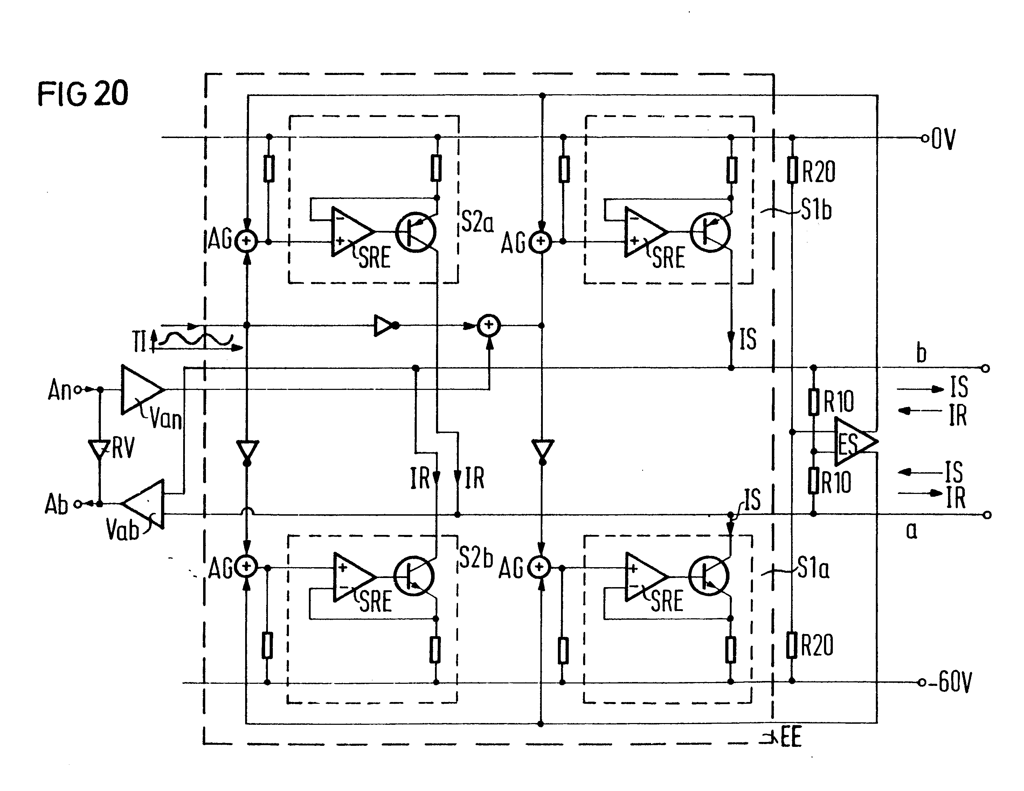

Die Figur 20 zeigt eine, z.B. auf einem Monolithen in integrierter Technik angebrachte Schaltungsanordnung mit Einspeiseeinheit EE, die die vier Stromquellen S1a, S1b, S2a, S2b enthält und die am Ausgang der auch in der nicht vorveröffentlichten DE-OS 28 33 768 beschriebenen, transformatorfreien Gabelschaltung Van/ Vab/RV angebracht ist und dort verlustarm Strom über die Adern a, b in die nicht gezeigte Teilnehmerstation einspeist. Die vom Potential des Abgriffs des ersten Spannungsteilers R10/R10 gesteuerte Entstöreinheit ES wirkt über addierende, analog betriebene, z.B. jeweils durch einen Differenzverstärker bzw. Summenverstärker gebildete Mischglieder AG auf die Stromquellen bzw. auf deren Stromregeleinheiten SRE ein.

Die vier Stromquellen arbeiten paarweise zusammen, indem die ersten Stromquellen S1a, S1b Ströme gleicher, nämlich erster Polarität IS mit jeweils in der Regel gleicher Momentanamplitude in die Adern a, b einspeisen. In ähnlicher Weise speisen die zweiten Stromquellen S2a, S2b Ströme zweiter Polarität IR mit unter sich jeweils in der Regel gleicher Momentanamplitude in die Adern a, b ein. Nur außerhalb der Regel, nämlich bei Störungen, insbesondere während der oben beschriebenen Störspannungen, speisen zusammenarbeitende Stromquellen, von der Entstöreinheit ES gesteuert, vorübergehend Ströme mit unter sich ungleichen Momentanamplituden ein. Bei Störungen ändert nämlich die Entstöreinheit ES in gegenkoppelnder Weise die den Taktimpulsen TI überlagerte Gleichvorspannung bzw. den entsprechenden überlagerten Gleichstromanteil, so daß die jeweils zusammenarbeitenden Stromquellen während der Dauer der Entstörung unter sich ungleiche Momentanamplituden einspeisen können.

Es zeigte sich, daß die Entstöreinheit ES daneben auch Störungen kompensiert, die durch Herstellungstoleranzen, also Herstellungsungenauigkeiten, bez. der Eigenschaften der Haupttransistoren der Stromquellen und auch bez. der Eigenschaften der Stromregeleinheiten SRE sowie der Mischglieder AG bewirkt werden. Durch solche Toleranzen würden an sich die eingespeisten Ströme, z.B. IS, von zusammenarbeitenden Stromquellen unter sich schon in der Regel ungleiche Momentanamplituden aufweisen. Die Entstöreinheit ES kompensiert aber auch die Wirkungen solcher schwer vermeidbarer Herstellungsungenauigkeiten, indem die Entstöreinheit ES auch in diesen Fällen die den Taktimpulsen TI überlagerten Gleichvorspannungen bzw. die entsprechenden Gleichströme in gegenkoppelnder Weise so stark ändert, daß die betreffenden Ströme zusammenarbeitender Stromquellen unter sich jedenfalls nahezu gleiche Momentanamplituden aufweisen. Diese Wirkung der Entstöreinheit ES beruht darauf, daß bei unterschiedlichen Eigenschaften der zusammenarbeitenden Stromquellen bzw. ihrer Mischglieder AG auch das Potential am Abgriff des ersten Spannungsteilers R10/R10 vom Sollwert, hier vom Potential am Abgriff des zweiten Spannungsteilers R20/R20 abweichen würde. Die Entstöreinheit kompensiert auch durch solche ungleiche Eigenschaften bewirkte Abweichungen des Potentials am Abgriff des ersten Spannungsteilers R10/R10, bis durch gegenkoppelnde Nachregelung die Eigenschaften gleich werden, d.h. bis die von zusammenarbeitenden Stromquellen eingespeisten Ströme unter sich in der Regel gleiche Momentanamplituden aufweisen. Außerhalb der Regel, insbesondere bei durch Starkstromkabel induzierten Störspannungen, kompensiert die Entstöreinheit ES ebenfalls diese Störungen, indem sie das Potential am Abgriff des ersten Spannungsteilers R10/R10 in diesen Fällen durch Erzeugung von vorübergehenden, unter sich ungleichen Momentanamplituden der Ströme der zusammenarbeitenden Stromquellen stabilisiert.

Um auch die Wirkungen der Herstellungsungenauigkeiten ausreichend kompensieren zu können, sollte die gleiche Entstöreinheit ES nicht nur jene Stromquellen, deren Übersteuerung während der Einspeisung geprüft wird, sondern auch alle jene restlichen Stromquellen, deren Übersteuerung nicht geprüft wird, gegenkoppelnd so steuern, daß in jedem Moment das Potential am Abgriff des ersten Spannungsteilers R10/R10 gut stabilisiert wird. Statt alle vier Stromquellen nur mittels der gleichen, also mittels einer einzigen Entstöreinheit
ES in dieser Weise zu steuern, kann man auch mehrere
solche, z.B. mit verschiedenen Versorgungsspannungen
versorgte und damit auf unterschiedlichen Pegeln arbeitende Entstöreinheiten ES, an ihren Eingängen vom Potential des Abgriffs des ersten Spannungsteilers
R10/R10 direkt, oder indirekt z.B. über Zwischenverstärker, beeinflußt, anbringen und mit jeder der Entstöreinheiten ES nur einen Teil der Stromquellen steuern. Dabei sollen aber bevorzugt ebenfalls alle vier
Stromquellen von solchen Entstöreinheiten ES gesteuert
werden. Würde man nur z.B. die an die a-Ader, oder z.B.
nur die an die b-Ader, angeschlossenen Stromquellen
S1a, S2a oder S1b, S2b von der Entstöreinheit steuern,
wäre zwar eine gewissen Kompensation bereits erreicht,
aber der Bereich der Intensitäten der kompensierbaren
Störungen wäre verringert. Bei Steuerung aller Stromquellen ist hingegen der Bereich der Intensitäten, die die
Störungen aufweisen dürfen und die also kompensiert werden, besonders groß.

Obwohl die Erfindung anhand von Ausführungsbeispielen
in bipolarer Technik erläutert wurde, ist die Erfindung
nicht auf diese bipolare Technik beschränkt. Es eignen
sich auch andere Techniken, z.B. die MOS-Technik, als
Herstellungstechnik für die Erfindung und für Weiterbildungen derselben.

16 Patentansprüche
20 Figuren

Patentansprüche

1. Verfahren zur spulen-, relaiskontakt- und transformatorfreien Rufstrom- und Schleifenstromspeisung in eine eine erste und eine zweite Ader aufweisende Teilnehmerleitung zu einer Teilnehmerstation, mit einer Einspeiseeinheit, die eine während des Rufens von Rufstromgenerator-Taktimpulsen gesteuerte Stromquelle enthält, nämlich eine erste an die erste Ader angeschlossene Stromquelle, wobei die Einspeiseeinheit während des Rufens einen abwechselnden Betriebszustand aufweist, bei dem rhythmisch die erste Stromquelle entweder, gesteuert von einer Taktimpulsphase, einen ersten Rufstromimpuls der ersten Strompolarität über die erste Ader zur Teilnehmerstation einspeist, oder, gesteuert von einer Taktimpulspause, keinen Strom über diese erste Ader zur Teilnehmerstation einspeist, so daß die erste Stromquelle über die Teilnehmerleitung eine Folge erster unipolarer Rufstromimpulse als Rufstrom zur Teilnehmerstation einspeist, und wobei die Einspeiseeinheit nach dem Abheben des Teilnehmers, zur Einspeisung des - mit dem Teilnehmer gelieferten Empfangsinformationen - modulierbaren Schleifenstromes, in einen andauernden Betriebszustand gesteuert wird, bei dem die erste Stromquelle den Schleifenstrom über die Teilnehmerleitung zur Teilnehmerstation einspeist, insbesondere für ein PCM-Fernsprech-Vermittlungssystem, d a d u r c h   g e k e n n z e i c h n e t ,  daß die Stromregeleinheit (INa,T3) der ausgangsseitig gleichstrommäßig einen sehr hochohmigen Innenwiderstand aufweisenden, daher als gesteuerte Konstantstromquelle wirkenden Stromquelle (S1a) bei Übersteuerung die Rufstromabschaltung veranlaßt, indem a) die Stromregeleinheit (INa, T3), bei Betrieb in ihrem übersteuerten Bereich während zumindest eines Teils der Rufstromimpulsdauer, die Einspeiseeinheit (EE) in deren abwechselnden Betriebszustand zur Fortsetzung der Rufstromeinspeisung steuert und indem b) die Stromregeleinheit (INa, T3), bei ständigem Betrieb in ihren aktiven also nicht übersteuerten Bereich während der Rufstromimpulsdauer, die Einspeiseeinheit (EE) in deren andauernden Betriebszustand zur Einspeisung des Schleifenstromes steuert.

2. Verfahren nach Anspruch 1, d a d u r c h   g e - k e n n z e i c h n e t , daß eine weitere erste, an die zweite Ader angeschlossene Stromquelle (S1b) der Einspeiseeinheit (EE) während des Rufens, gesteuert von der Taktimpulsphase, über die zweite Ader (b) der Teilnehmerleitung einen Rufstromimpuls (IS) der ersten, die Rückleitung des Rufstromimpulses (IS) der ersten Stromquelle (S1a) der ersten Ader (a) über die Teilnehmerstation in die weitere erste Stromquelle (S1b) unterstützenden Strompolarität einspeist, daß eine zweite, an die erste Ader (a) angeschlossene Stromquelle (S2a) sowie eine weitere zweite, an die zweite Ader (b) angeschlossene Stromquelle (S2b) während des Rufens, gesteuert von der Taktimpulspause, einen Rufstromimpuls der zweiten, der ersten Strompolarität (IS) jeweils entgegengesetzten Strompolarität (IR) einspeisen, so daß die ersten Stromquellen (S1a,S1b) im abwechselnden Betriebszustand erste unipolare Stromimpulse (IS) der ersten Strompolarität und die zweiten Stromquellen (S2a, S2b), in den Pausen zwischen den ersten unipolaren Stromimpulsen (IS), zweite unipolare Stromimpulse (IR) der zweiten Strompolarität einspeisen und so daß damit dann die Einspeiseeinheit (EE) bipolare Rufstromimpulse einspeist, und daß im andauernden Betriebszustand der Einspeiseeinheit (EE), also nach dem Abheben des Teilnehmers, nur die ersten Stromquellen (S1a,S1b) oder nur die zweiten Stromquellen (S2a,S2b), aber nicht die beiden übrigen Stromquellen der Einspeiseeinheit (EE) den Schleifenstrom in die Teilnehmerleitung
(a,b) einspeisen.

3. Verfahren nach einem der Ansprüche 1 oder 2, d a -
d u r c h   g e k e n n z e i c h n e t ,   daß die Stromregeleinheit (INa) einen Regeltransistor (T3) enthält,
der bei Übersteuerung der Stromregeleinheit in seinen gesättigten Zustand, nach dem Abheben aber in seinen ungesättigten Zustand gesteuert wird, und daß dieser Regeltransistor (T3,T1) in seinem gesättigten Zustand (über
T4,1a,SU) an ein Verknüpfungsglied (RS) ein das Nichtabheben anzeigendes, die Einspeiseeinheit (EE) weiterhin
in ihren abwechselnden Zustand steuerndes Rufen-Fortsetzen-Signal abgibt.

4. Verfahren nach Anspruch 2 und 3, d a d u r c h   g e -
k e n n z e i c h n e t ,   daß beide erste Stromquellen
(S1a, S1b) getrennt voneinander, bei Übersteuerung ihre
Rufen-Fortsetzen-Signale an eine Verknüpfungseinheit
(SU,RS) abgeben und daß, bei Fehlen eines dieser Rufen-
Fortsetzen-Signale, diese Verknüpfungseinheit ein Unsymmetriesignal, nämlich z.B. ein Erdschluß-Signal bzw.
Fremdspannungs-Signal, abgibt.

5. Verfahren nach einem der vorhergehenden Ansprüche,
d a d u r c h   g e k e n n z e i c h n e t ,   daß, im
andauernden Betriebszustand der Einspeiseeinheit (EE),
der Schleifenstrom (ISa, ISb), durch Steuerung der den
Schleifenstrom einspeisenden Stromquelle (S1a,S1b) mit
den Empfangsinformationen, die dem Teilnehmer geliefert
werden sollen, mit den betreffenden Empfangsinformationen moduliert wird.

6. Verfahren nach einem der vorhergehenden Ansprüche, d a d u r c h   g e k e n n z e i c h n e t , daß die Einspeiseeinheit (EE) zusammen mit einer transformatorfreien 2-Draht/4-Draht-Gabelschaltung auf einem gemeinsamen monolithischen Baustein (Fig. 2) angebracht ist und daß die an die 2-Drahtseite angeschlossene Einspeiseeinheit (EE) ihre Ströme (IS,IR) über die 2-Drahtseite (WB bzw. a',b', Fig. 2) in die an die 2-Drahtseite (a,b) angeschlossene Teilnehmerleitung einspeist.

7. Verfahren nach einem der vorhergehenden Ansprüche, d a d u r c h   g e k e n n z e i c h n e t , daß die Einspeiseeinheit (EE), zusammen mit einem D/A-Wandler (Codec)  auf einem gemeinsamen monolithischen Baustein (Fig. 2) angebracht ist, und daß die an der Analogseite des D/A-Wandlers angeschlossene, den Schleifenstrom einspeisende Stromquelle (S1a, S1b) der Einspeiseeinheit (EE) in deren andauerndem Betriebszustand mit den dekodierten Empfangsinformationen gesteuert wird.

8. Verfahren nach einem der vorhergehenden Ansprüche, d a d u r c h   g e k e n n z e i c h n e t , daß die Stromquelle (S1a) die Rufstromimpulse jeweils mit einem sinusähnlichen zeitlichen Verlauf einspeist.

9. Verfahren nach Anspruch 2 und 8, d a d u r c h g e k e n n z e i c h n e t , daß die vier Stromquellen (S1a, S1b, S2a, S2b) jede für sich Rufstromimpulse (IS, IR) mit jeweils sinusähnlichem zeitlichen Verlauf einspeisen (Fig. 4).

10. Verfahren nach Anspruch 8 oder 9, d a d u r c h g e k e n n z e i c h n e t , daß die Rufstromimpulse angenähert jeweils Sinushalbwellen (Fig. 6 bis 8) bilden.

11. Verfahren nach Anspruch 8 oder 9, d a d u r c h g e k e n n z e i c h n e t , daß die Rufstromimpulse angenähert einen glockenförmigen Verlauf (Fig. 11 bis 14) bilden.

12. Verfahren nach einem der Ansprüche 8 bis 11, d a - d u r c h   g e k e n n z e i c h n e t , daß die Übersteuerung angenähert im Strommaximum der Rufstromimpulse als Kriterium für die Rufstromabschaltung ausgenutzt wird.

13. Verfahren nach Anspruch 2 und nach einem beliebigen anderen vorhergehenden Anspruch, d a d u r c h g e - k e n n z e i c h n e t , daß eine Entstöreinheit (ES) - gesteuert von der Spannungsdifferenz zwischen einem Abgriff eines ersten, zwischen den Teilnehmerleitungsanschlüssen (a, b) angeschlossenen Spannungsteilers (R10/R10) und einem Abgriff eines zweiten, zwischen die Stromquellen (S1a, S2a, S1b, S2b) mit Strom versorgenden Versorgungsanschlüssen (0V/-60V) angeschlossenen Spannungsteilers (R20/R20) - zwei gleichzeitig Rufstrom- bzw. Schleifenstrom einspeisende, gesteuerte Stromquellen

0006583

(S1a, S1b), deren Übersteuerung während der Einspeisung geprüft wird, gegenkoppelnd so steuert, daß die die Entstöreinheit (ES) steuernde Spannungsdifferenz vermindert wird.

14. Verfahren nach Anspruch 13, d a d u r c h   g e - k e n n z e i c h n e t , daß die Entstöreinheit (E5) durch einen mindestens eine einzige Verstärkerstufe enthaltenden Differenzverstärker gebildet wird, dessen Ausgangssignal bzw. dessen Ausgangssignale (Q bzw. $\bar{Q}$) den Stromregeleinheiten (OP2, OP3 bzw. T1, T3) der betreffenden Stromquellen (S1a, S1b) zugeleitet werden.

15. Verfahren nach Anspruch 13 oder 14, d a d u r c h   g e k e n n z e i c h n e t , daß die Entstöreinheit (ES) zwei Ausgangssignale (Q, $\bar{Q}$), nämlich das nicht invertierte (Q) und das invertierte ($\bar{Q}$), liefert, von denen das eine ($\bar{Q}$, Qa) die an die erste Ader (a) und das andere (Q, Qc) die an die zweite Ader (b) der Teilnehmerleitung (TL) angeschlossene, jeweils gleichzeitig Strom einspeisende Stromquelle (S1a, S1b) steuert.

16. Verfahren nach Anspruch 13, 14 oder 15, d a d u r c h   g e k e n n z e i c h n e t , daß die gleiche oder zumindestens eine weitere solche Entstöreinheit (ES) alle Rufstrom bzw. Schleifenstrom einspeisenden Stromquellen (S1a, S1b), deren Übersteuerung während der Einspeisung geprüft wird, sowie alle (S2a, S2b), deren Übersteuerung während der Einspeisung nicht geprüft wird, gegenkoppelnd so steuert, daß das Potential am Abgriff des ersten Spannungsteilers (R10/R10) ununterbrochen stabilisiert wird.

FIG 1

FIG 2

FIG 3

0006583
3/10

FIG 4

FIG 5

FIG 6

FIG 7

FIG 8

FIG 9

FIG 10

FIG 11

FIG 12

FIG 13

FIG 14

FIG 15

FIG 16

**FIG 17**

**FIG 18**

FIG 19

FIG 20

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | H 04 Q 3/00 H 04 M 19/00 19/02 |
| | AU - B - 429 674 (AMALGAMATED WIRELESS) * Seite 7, Zeile 20 bis Seite 8, Zeile 29 * -- | 1-3,13, 14 | |
| | US - A - 3 916 110 (LEE et al.) * Spalte 2, Zeile 36 bis Spalte 3, Zeile 38 * -- | 13,14 | |
| D | DE - A - 2 627 140 (HITACHI) * Seite 9, Zeile 24 bis Seite 10, Zeile 1; Seite 17, Zeile 24 bis Seite 19, Zeile 27 * -- | 2,5 | RECHERCHIERTE SACHGEBIETE (Int. Cl. 3) H 04 M 19/00 19/02 H 04 Q |
| PE | DE - A - 2 844 492 (T.R.T.) * Seite 8, Zeile 27 bis Seite 9, Zeile 18 * ---- | 8-10 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 08-10-1979 | VERSLYPE |

EPA form 1503.1 06.78